# EUROPEAN PATENT APPLICATION

(11) **EP 4 462 939 A1**
(43) Date of publication of application: **13.11.2024**
(21) Application number: 22918773.7
(22) Date of filing: 09.12.2022
(51) Int. Cl.: H04W 76/11, H04W 76/12

(54) **TERMINAL DEVICE, BASE STATION DEVICE, PROCESSING DEVICE, AND PROCESSING METHOD**

(30) Priority: 07.01.2022 JP 2022001849
(71) Applicant: Sony Group Corporation, Tokyo 108-0075 (JP)
(72) Inventor: TSUDA Shinichiro, Tokyo 108-0075 (JP)
(74) Representative: Witte, Weller & Partner Patentanwälte mbB
(86) International application number: PCT/JP2022/045485
(87) International publication number: WO 2023/132187

(57) **Abstract**

A UE 10 transmits a request for mapping a plurality of QoS flows to one network slice associated with one PDU session, receives S-NSSAI allocated to one network slice to which the plurality of QoS flows is mapped, and establishes one PDU session associated with one network slice to which the plurality of QoS flows is mapped. The UE 10 allocates S-NSSAI as identification information for each of the plurality of QoS flows, and maps data transmitted and received on one PDU session to any one of the plurality of QoS flows on the basis of the identification information.

## Description

### TECHNICAL FIELD

The present disclosure relates to a terminal device, a base station device, a processing device, and a processing method that handle a plurality of QoS flows.

### BACKGROUND ART

A first standard of the 5th generation mobile communication system (5GS) having features of enhanced mobile broadband (eMBB), low latency and high reliability (URLLC: Ultra-Reliable and Low Latency Communications), and massive machine type communication (mMTC) has been formulated as Rel-15 in 2018. In addition, in March 2020, a 5G-compatible service has been started in Japan.

Before 5G, wearable devices compatible with XR (Extended Reality), which collectively refers to AR (Augmented Reality), VR (Virtual Reality), and MR (Mixed Reality), have appeared mainly for use cases of games. However, from the viewpoint of delay and throughput, there has not been easy to distribute moving image content that requires real-time properties through wireless.

In 5G, distribution of 4K or 8K moving image content is expected due to the features of ultra-high speed, low delay and high reliability, and multiple simultaneous connections. Furthermore, wearable devices are also expected to spread as post smartphones. Some use cases of wearable devices require consideration of not only the aspect of ultra-high speed but also the aspect of low delay and high reliability.

For example, in a use case where XR content is displayed on a head mounted display (HMD) through wireless communication, it is required to handle a relatively small volume of data acquired by a sensor equipped in the HMD and a large volume of data such as high-resolution moving image content in one service. Then, it is desirable that different QoS controls can be applied to the plurality of types of data. In order to realize this, a mechanism (framework) for setting up a network slice supporting a plurality of QoS flows is desired.

Patent Document 1 discloses a technique of including two pieces of S-NSSAI (Single-Network Slice Selection Assistance Information) in a PDU session establishment request message.

### CITATION LIST

### PATENT DOCUMENT

Patent Document 1: Japanese Patent Application Laid-Open No. 2019-525506

### SUMMARY OF THE INVENTION

### PROBLEMS TO BE SOLVED BY THE INVENTION

However, in Patent Document 1, first S-NSSAI is used for selection of a slice entity in a VPLMN, and second S-NSSAI is used for selection of a slice entity in an HPLMN. That is, the technique of Patent Document 1 is for using a network slice of an LPLMN from a roaming destination, and does not set up a network slice supporting a plurality of QoS flows.

The present disclosure is intended to solve the above problems, and an object thereof is to provide a mechanism for setting up a network slice supporting a plurality of QoS flows.

### SOLUTIONS TO PROBLEMS

A terminal device according to the present disclosure is a terminal device including a processor and a transceiver, in which the processor, through the transceiver, transmits a request for mapping a plurality of QoS flows to one network slice associated with one PDU session, receives an S-NSSAI allocated to the one network slice to which the plurality of QoS flows is mapped, and establishes the one PDU session associated with the one network slice to which the plurality of QoS flows is mapped.

A base station device according to the present disclosure includes a processor and a transceiver, in which the processor establishes, through the transceiver, one PDU session associated with one network slice to which a plurality of QoS flows is mapped, and receives a QoS profile configured for each of the plurality of QoS flows.

A processing device according to the present disclosure is a processing device including a processor, in which the processor receives a request for mapping a plurality of QoS flows to one network slice associated with one PDU session, acquires subscription information of a terminal device to which the PDU session is to be established, and allocates identification information for each of the plurality of QoS flows and maps the plurality of QoS flows to the one network slice in a case where the plurality of QoS flows is available on the basis of the subscription information.

A processing method according to the present disclosure includes: receiving a request for mapping a plurality of QoS flows to one network slice associated with one PDU session; acquiring subscription information of a terminal device to which the one PDU session is to be established; and allocating identification information for each of the plurality of QoS flows and maps the plurality of QoS flows to the one network slice in a case where the plurality of QoS flows is available on the basis of the subscription information.

### BRIEF DESCRIPTION OF DRAWINGS

Fig. 1 is a diagram illustrating a configuration of a network architecture of a 5GS.
Fig. 2 is a diagram illustrating a configuration of an XR architecture in 5G.
Fig. 3 is a diagram illustrating an example of a QoS architecture of 5GS.
Fig. 4 is a diagram illustrating an example of registration procedure in 5GS.
Fig. 5A is a diagram illustrating one example of a correspondence relationship between standardized 5QI and QoS features.
Fig. 5B is a diagram illustrating another example of the correspondence relationship between standardized 5QI and QoS features.
Fig. 6 is a diagram illustrating an example of connection procedure in 5GS.
Fig. 7A is a diagram illustrating one example of PDU session establishment procedure.
Fig. 7B is a diagram illustrating another example of PDU session establishment procedure.
Fig. 8A is a diagram illustrating an example of a correspondence relationship between S-NSSAI and QFI.
Fig. 8B is a diagram illustrating an example of a QoS profile for each QFI.
Fig. 9 is a diagram illustrating an example of a UE-activated network slice setup request.
Fig. 10A is a diagram illustrating an example of a network slice setup request in the PDU session establishment procedure.
Fig. 10B is a diagram illustrating an example of a network slice setup request in the PDU session establishment procedure.
Fig. 11 is a diagram illustrating an example of a network slice setup change after the PDU session establishment.

### MODE FOR CARRYING OUT THE INVENTION

Hereinafter, embodiments of the present disclosure will be described in detail with reference to the drawings. In the drawings, the same or corresponding members will be denoted by the same reference signs, and detailed description thereof will be appropriately omitted.

The configuration of the present disclosure is as follows.

Among them, Chapters 1 to 7 are descriptions of the related art already standardized by 3GPP, and Chapters 8 and subsequent chapters are descriptions of the technology according to the present disclosure. Also, particularly important portions of the present disclosure will be described in chapter 10.
1. 5GS network architecture
2. Architecture of XR in 5GS
   2-1. XR device
   2-2. XR server
3. 5GS QoS control
4. Various NSSAI
5. registration procedure in 5GS
6. Standardized QoS features
7. connection procedure in 5GS
8. Relationship among S-NSSAI, QoS, and PDU session
9. Subscription using network slice
   9-1. Case where subscription is made on a per-service basis
   9-2 Case where subscription is made in units of 5QI
10. Request for setting up a network slice to support multiple QoS flows
   10-1. Network slice setup request for UE Activation
   10-1-1. Case where subscription is made on per-service basis
   10-1-2. Case where subscription is made in 5QI units
   10-2. network slice setup request within PDU session establishment procedure
   10-2-1. Case where subscription is made on per-service basis
   10-2-2. if subscription is made in 5QI units
   10-2-3. Network slice setup request according to DNN
   10-2-4. Network slice setup request by adding the QFI
   10-3. Change in network slice setup after establishing PDU session
11. Conclusion

### <1. 5GS network architecture>

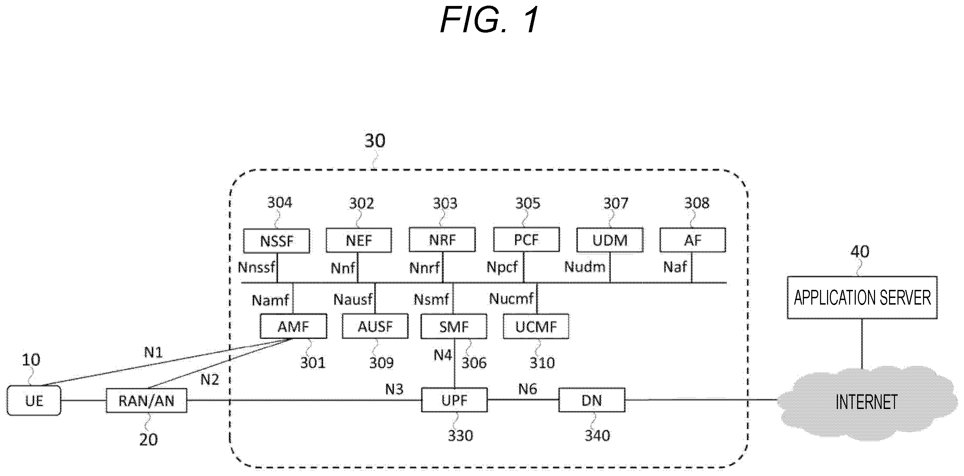

Fig. 1 is a diagram illustrating a configuration of a network architecture of a 5G system (5GS). The 5GS includes a user equipment (UE) 10, a radio access network/access network (RAN/AN) 20, and a 5G core (5GC) 30. The 5GC is also called NGC (NG CORE) or core network.

An application server (AS) 40 that processes the application is connected to the 5GS through the Internet so that the UE 10 can use the application through the 5G service.

In a case where a subject providing the application has a subscription such as a service level agreement (SLA) with a public land mobile network (PLMN) operator providing the 5G service, the application server 40 can be arranged in the 5GC 30 as a DN 340. The application server 40 may be provided in a form of an edge server.

A function group of a control plane of 5GB includes a plurality of network functions (NFs) including an access and mobility management function (AMF) 301, a network exposure function (NEF) 302, a network repository function (NRF) 303, a network slice selection function (NSSF) 304, a policy control function (PCF) 305, a session management function (SMF) 306, a unified data management (UDM) 307, an application function (AF) 308, an authentication server function (AUSF) 309, and a UE radio capability management function (UCMF) 310.

The UDM 307 includes a unified data repository (UDR) that holds and manages subscriber information, and a front end (FE) unit that processes the subscriber information. In addition, the AMF 301 performs mobility management. The SMF 306 performs session management.

The UCMF 310 holds UE radio capability information corresponding to all UE radio capability IDs in a Public Land Mobile Network (PLMN). The UCMF 310 is responsible for allocating each PLMN- assigned UE radio capability ID.

An Namf is a service-based interface provided by the AMF 301. An Nsmf is a service-based interface provided by the SMF 306. An Nnef is a service-based interface provided by the NEF 302. An Npcf is a service-based interface provided by the PCF 305. An Nudm is a service-based interface provided by the UDM 307. An Naf is a service-based interface provided by AF 308. An Nnrf is a service-based interface provided by the NRF 303. An Nnssf is a service-based interface provided by the NSSF 304. An Nausf is a service-based interface provided by the AUSF 309. An Nucmf is a service-based interface provided by the UCMF 310. Each NF exchanges information with other NFs through a respective service-based interface.

Furthermore, a user plane function (UPF) 330 has a function of user plane procedure. The Data Network (DN) 340 has a function of enabling connection to a service unique to a mobile network operator (MNO), the Internet, or a third-party service. The UPF 330 functions as a transfer processing unit of user plane data processed by the application server 40. The UPF 330 also functions as a gateway connected to the RAN/AN 20.

The RAN/AN 20 has a function of enabling connection to the radio access network (RAN) and connection to the access network (AN) other than the RAN. The RAN/AN 20 includes a base station called a gNB or an ng-eNB. The R_AN may be referred to as a next generation (NG)-R_AN.

Information is exchanged between UE 10 and the AMF 301 through a reference point N1. Information is exchanged between the RAN/AN 20 and the AMF 301 through a reference point N2. Information is exchanged between the SMF 306 and the UPF 330 through a reference point N4.

The SMF 306 performs QoS control for each service data flow. The QoS control of the SMF 306 may be applied to both IP and Ethernet type service data flows. The SMF 306 provides QoS authorized for each specific service by performing QoS control for each service data flow.

The SMF 306 may utilize indicators such as QoS subscriber information in conjunction with service-based, subscription-based, or predefined PCF internal policy rules.

The SMF 306 uses a policy and charging control (PCC) rule related to a QoS flow, that is, a QoS-controlled data flow, to determine QoS to be authorized for the QoS flow.

In a case where the QoS flow is deleted, the SMF 306 may notify the PCF 305 that the QoS flow has been deleted. In addition, in a case where the bit rate guaranteed by the QoS flow, that is, a guaranteed flow bit rate (GFBR) cannot be guaranteed, the SMF 306 can notify the PCF 305 that the GFBR cannot be guaranteed.

As a QoS reservation procedure of the QoS flow, a UE-activated QoS flow can be established. In addition, as part of the QoS flow change process, QoS downgrade or upgrade is possible.

### <2. Architecture of XR in 5G>

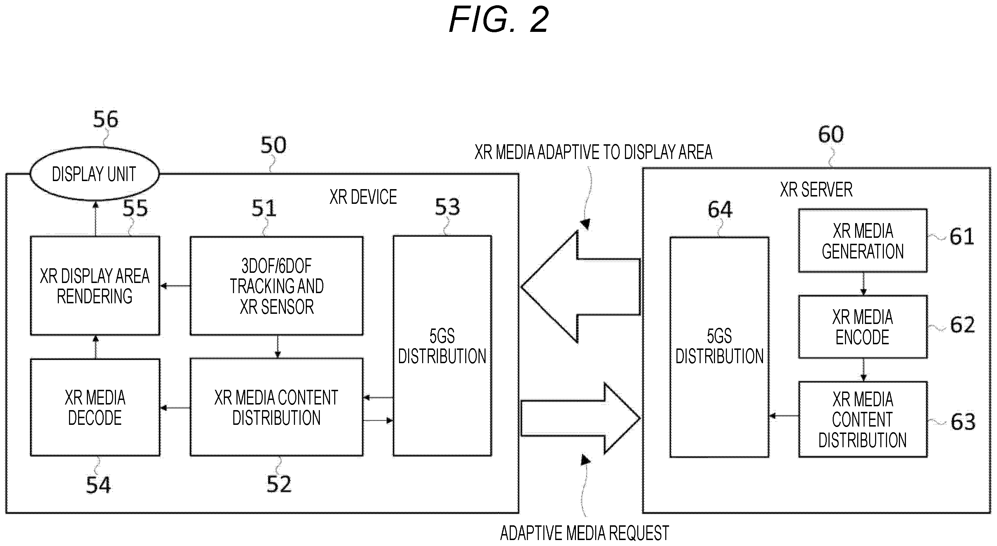

Fig. 2 is a diagram illustrating a configuration of an architecture of a use case called "Viewport-dependent Streaming" described in 3GPP TR 26.928 "Extended Reality (XR) in 5G". This architecture includes an XR device (XR Device) 50 and an XR server (XR Server) 60. The XR device 50 corresponds to the UE 10 in the 5GS network architecture in Fig. 1. The XR server 60 corresponds to the DN 340 or the application server 40 in the network architecture of 5GS of Fig. 1.

### (2-1. XR device)

The XR device 50 includes a 3 degrees of freedom (DOF)/6 DOF tracking and XR sensor unit 51, an XR media content distribution unit 52, a 5GS distribution unit 53, an XR media decoding unit 54, an XR display area rendering unit 55, and a display unit 56.

The 3 DOF/6 DOF tracking and XR sensor unit 51 acquires pose information (posture information) of the user as tracking information for specifying a display area (viewport). This pose information is included in an adaptive media request in the XR media content distribution unit 52 and provided to the XR server 60. Note that the adaptive media request may include 3DOF/6DOF tracking, inertial information acquired by the XR sensor unit 51, and the like in addition to the pose information.

The XR media content distribution unit 52 transmits an adaptive media request to the XR server 60 through the 5GS distribution unit 53. Furthermore, the XR media content distribution unit 52 receives the XR media adapted to the display area from the XR server 60 through the 5GS distribution unit 53.

The XR media decoding unit 54 decodes the XR media adapted to the display area received through the 5GS distribution unit 53 and the XR media content distribution unit 52.

The XR display area rendering unit 55 renders the XR media adapted to the display area decoded by the XR media decoding unit 54 in consideration of 3DOF/6DOF tracking and user's latest pose information acquired from the XR sensor unit 51, and displays the XR media on the display unit 56.

The XR display area rendering unit 55 may have a function called a time warp. In order to reduce Motion-to-Photon Latency that causes VR sickness, the time warp is a technology of specifying a future display area (second display area) predicted from a current display area (first display area) on the basis of 3DOF/6DOF tracking and the latest inertial information acquired from the XR sensor unit 51, and applying coordinate transformation of transforming XR media adapted to the first display area into XR media adapted to the second display area.

### (2-2. XR server)

The XR server 60 includes an XR media generation unit 61, an XR media encoding unit 62, an XR media content distribution unit 63, and a 5GS distribution unit 64.

The XR media generation unit 61 generates XR media adapted to the display area according to the adaptive media request received from the XR device 50.

The XR media encoding unit 62 encodes XR media in an adaptive format. The adaptive format is controlled, for example, on the basis of the communication quality of a wireless section. If the communication quality is good, a higher resolution format is selected, and if the communication quality is not good, a lower resolution format is selected.

Furthermore, in a case where the XR media is divided in the display area, the adaptive format may be controlled on the basis of, for example, the user's pose information. A higher resolution format is selected in a central area of the display area that is the center of the viewpoint of the user, and a lower resolution format is selected in an area away from the center of the display area. As a result, the data size of the XR media distributed to the XR device 50 can be reduced, and a traffic load in the wireless section can be reduced.

The XR media content distribution unit 63 distributes the XR media encoded in the adaptive format to the XR device 50 through the 5GS distribution unit 64. The XR media content distribution unit 63 or the 5GS distribution unit 64 may provide QoS control according to an encoding format of XR media or a position in a display area.

For example, data in a high-resolution format may be transmitted with high priority, and data in a low-resolution format may be transmitted with low priority. Alternatively, data in a central area of the display area may be transmitted with high priority, and data in an area away from the center of the display area may be transmitted with low priority.

Note that each block configuring the XR device 50 and the XR server 60 illustrated in Fig. 2 represents a logical function. Therefore, these functions may be implemented in an aggregated manner or may be implemented in a divided manner into more subdivided functions. In addition, these functions may be statically or dynamically distributed and implemented in a plurality of devices.

For example, the 5GS distribution unit 53 of the XR device 50 may be realized by the function of the UE 10. Furthermore, the 5GS distribution unit 64 of the XR server 60 may be realized by the functions of the RAN/AN 20 and the 5GC 30. As described above, in the service such as XR, it is required to handle data of a relatively small capacity such as pose information and inertial information and data of a large capacity such as XR media, and it is further desired that different QoS control can be applied according to the type of data.

### <3. 5GS QoS control>

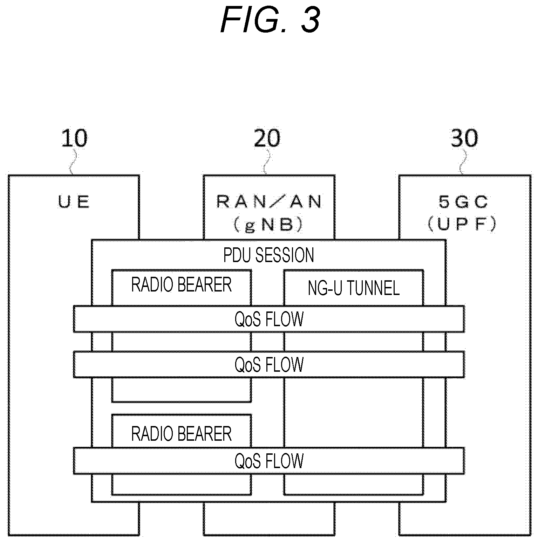

Fig. 3 is a diagram illustrating an example of a QoS architecture of 5GS (created based on 3GPP TS 38.300). At a non-access stratum (NAS) level, a QoS flow is the finest granularity in distinguishing different QoS in a protocol data unit (PDU) session. Within the PDU session, QoS flows are identified by the QFI (QoS Flow ID) .

The base station (gNB) of the RAN/AN 20 can establish at least one data radio bearer (DRB) with each UE 10 together with the PDU session. The DRB is a logical path for transmitting data. In the QoS model of 5G, a guaranteed flow bit rate (GBR) in which a band is guaranteed and a non-guaranteed flow bit rate (Non-GBR) in which a band is not guaranteed are supported.

The RAN/AN 20 and the 5GC 30 ensure quality of service by mapping each packet to an appropriate QoS flow and DRB. That is, two-stage mapping of mapping between an IP flow and a QoS flow in non-access stratum (NAS) and mapping between a QoS flow and a DRB in access stratum (AS) is performed.

At the NAS level, QoS flows are characterized by QoS profiles provided from the 5GC 30 to the RAN/AN 20 and the QoS rules provided from the 5GC 30 to the UE 10.

The QoS profile is used by the RAN/AN 20 to determine a processing manner on a wireless interface. The QoS rule is used to instruct the UE 10 to map the traffic of the user plane in the uplink to the QoS flow.

The QoS profile is provided from the SMF 306 to the RAN/AN 20 through the AMF 301 and the reference point N2, or is configured in the RAN/AN 20 in advance.

In addition, the SMF 306 may provide one or more QoS rules and, if necessary, QoS parameters of QoS flow levels associated with the QoS rules to the UE 10 through the AMF 301 and the reference point N1.

In addition to or instead of this, reflective QoS control can be applied to the UE 10. The reflective QoS control is QoS control that monitors the QFI of downlink packets and applies the same mapping to uplink packets.

The QoS flow is a GBR QoS flow or a non-GBR QoS flow depending on the QoS profile. The QoS profile of the QoS flow includes, for example, QoS parameters such as a 5QI (5G QoS Identifier) and an ARP (Allocation and Retention Priority).

The ARP includes information regarding a priority level, a pre-emption capability, and a pre-emption vulnerability. The priority defines the relative importance of the QoS flow, and indicates that the smallest value of the priority level is prioritized the most. The pre-emption capability is an indication that defines whether or not one QoS flow can deprive resources already allocated to other lower priority QoS flows. The pre-emption vulnerability is an index that defines whether or not a QoS flow is able to vacate its allocated resources to other higher priority QoS flows. Either "enabled" or "disabled" is configured to the pre-emption capability and the pre-emption vulnerability.

In the GBR QoS flow, the QoS profile includes uplink and downlink GFBR (Guaranteed Flow Bit Rate), uplink and downlink MFBR (Maximum Flow Bit Rate), uplink and downlink maximum packet loss rate (Maximum Packet Loss Rate), delay critical resource type (Delay Critical Resource Type), notification control (Notification Control), and the like.

In the non-GBR QoS flow, the QoS profile includes a reflective QoS attribute (RQA), additional QoS flow information (Additional QoS Flow Information), and the like.

The notification control of the QoS parameter indicates whether or not notification from the RAN/AN 20 is requested when a certain QoS flow cannot satisfy GFBR. In a case where it is determined that, for a GBR QoS flow, the notification control is "enabled" and GFBR cannot be satisfied, the RAN/AN 20 sends a notification to that fact to the SMF 306.

At that time, unless the RAN/AN 20 is in a special state of requesting release of the RAN resource of the GBR QoS flow, for example, radio link failure or R_AN internal congestion, the RAN/AN 20 needs to maintain the QoS flow. Then, in a case where it is determined that the GFBR is satisfied again for the QoS flow, the RAN/AN 20 transmits a new notification to that fact to the SMF 306.

An AMBR (Aggregate Maximum Bit Rate) is related to a Session-AMBR of each PDU session and the UE-AMBR of each UE 10. The Session-AMBR limits an aggregate bit rate expected to be provided across all non-GBR QoS flows for a particular PDU session and is managed by a UPF (User Plane Function). The UE-AMBR limits the aggregate bit rate expected to be provided across all non-GBR QoS flows for a UE 10 and is managed by the RAN/AN 20.

The 5QI relates to QoS features and provides guidelines (policies) for configuring node-specific parameters for each QoS flow. Standardized or preset QoS features of 5G can be learned from the 5QI, and no explicit signaling is performed. Signaled QoS features can be included as part of the QoS profile.

The QoS feature includes information regarding a priority packet delay budget, a packet error rate, an averaging window, a maximum data burst volume, and the like. A packet delay allowable time may include a packet delay allowable time at the 5GC 30.

At the AS level, the DRB defines a packet processing method at a wireless interface (Uu interface). The DRB provides the same packet transfer procedure for any packet.

The RAN/AN 20 maps the QoS flow to the DRB on the basis of the QFI and the QoS profile configured to the QFI. The RAN/AN 20 can establish different DRBs for packets requesting different packet transfer procedure (see Fig. 3). Further, the RAN/AN 20 may multiplex a plurality of QoS flows belonging to the same PDU session into the same DRB (see Fig. 3).

On the uplink, the mapping of QoS flows to DRBs is controlled by mapping rules signaled in two different ways. One method is a method called reflective mapping. In the reflective mapping, the UE 10 monitors the QFI of the downlink packet for each DRB and applies the same mapping to the uplink packet. Another method is a method called explicit configuration. In an explicit configuration, the mapping rule of the QoS flow to the DRB is explicitly signaled by an RRC.

In the downlink, the QFI is signaled on the Uu interface by the RAN/AN 20 for RQoS (Reflective Quality of Service), but neither the RAN/AN 20 nor the NAS signal the QFI for a DRB on the Uu interface unless they use the reactive mapping for the QoS flow carried on that DRB.

On the uplink, the RAN/AN 20 can configure signaling of the QFI on the Uu interface towards the UE 10. In addition, a default DRB can be configured for each PDU session. In a case where the uplink packet does not adapt to either the explicit configuration or the reactive mapping, the UE 10 maps the packet to the default DRB of the PDU session.

For the non-GBR QoS flows, the 5GC 30 may send additional QoS flow information parameters related to any QoS flow to the RAN/AN 20 to indicate to increase the frequency of certain traffic relative to other non-GBR QoS flows in the same PDU session.

How to map a plurality of QoS flows in a PDU session to one DRB depends on the RAN/AN 20. For example, the RAN/AN 20 may map the GBR QoS flow and the non-GBR QoS flow to a same DRB or to separate DRBs. Also, the RAN/AN 20 may map a plurality of GBR QoS flows to the same DRB or to separate DRBs.

In the 5G NR, a service data adaptation protocol (SDAP) sublayer is newly introduced for QoS control through a QoS flow. By the SDAP sublayer, traffic of the QoS flow is mapped to an appropriate DRB. The SDAP sublayer may have a plurality of SDAP entities, and has an SDAP entity for each PDU session on the Uu interface. The SDAP entity is established or released by the RRC.

The QoS flow is identified by the QFI in the PDU session container included in a GTP-U header. The PDU session is identified by a GTP-U TEID (Tunnel Endpoint ID). The SDAP sublayer maps each QoS flow to a specific DRB.

### <4. Various types of NSSAI>

The network slice is a unit of service acquired by dividing the communication service provided by the 5G according to a communication attribute (for example, data rate, delay, and the like) required for each service.

An S-NSSAI (Single-Network Slice Selection Assistance Information) is allocated to each network slice as information for supporting selection of the network slice. The S-NSSAI includes a pair of mandatory (Mandatory) Slice/Service Type (SST) including 8 bits for identifying a slice type (Slice Type) and optional (Optional) Slice Differentiator (SD) including 24 bits for distinguishing different slices in the same SST.

For example, as standardized values of SST, 1: eMBB (enhanced Mobile BroadBand), 2: URLLC (Ultra-Reliable and Low Latency Communications), 3: mIoT (massive IoT), 4: V2X, and 5: HMTC (High-Performance Machine-Type Communications) are defined.

The network slice setup information includes one or more configured NSSAIs. The serving public land mobile network (PLMN) can configure, for the UE 10, the configured NSSAI applied for each PLMN. Alternatively, a home PLMN (HPLMN) can configure the default configured NSSAI for the UE 10.

Only in a case where the UE 10 is not configured with the configured NSSAI for the serving PLMN, the UE 10 under management of the serving PLMN may use a Default configured NSSAI. Note that the default configured NSSAI may be configured in the UE 10 in advance.

The UDM 307 of the HPLMN may use UE parameter updates through UDM control plane processing to provide or update the Default Configured NSSAI.

The configured NSSAI includes one or more S-NSSAI. The configured NSSAI may include S-NSSAI having a standardized value or a PLMN-dedicated value. The configured NSSAI for the serving PLMN includes values of S-NSSAI that can be utilized in the serving PLMN. Each S-NSSAI included in the configured NSSAI may be associated with a value of corresponding one or more HPLMN S-NSSAI.

The S-NSSAI of the configured NSSAI for the HPLMN must match the subscribed S-NSSAI of the UE 10 when they are provided to the UE 10. The subscription information (Subscription Information) must include one or more pieces of S-NSSAI, that is, subscribed S-NSSAI. The UDM 307 sends up to 16 subscribed S-NSSAI to the AMF 301.

Depending on the policy of the telecommunications carrier (PLMN), one or more subscribed S-NSSAI may be configured to the default S-NSSAI. If a certain S-NSSAI is configured to the default S-NSSAI, in a case where the UE 10 does not send valid S-NSSAI as the Requested NSSAI in the registration request message, the 5GC 30 can provide a service for the UE 10 through the network slice instance associated with the default S-NSSAI. In addition, the subscription information for each S-NSSAI may include a subscribed DNN list and one default DNN. A DNN (Data Network Name) corresponds to an APN (Access Point Name) used in a 4G or earlier system.

The 5GC 30 collates Requested NSSAI provided by the UE 10 at the time of the registration request with the subscription information. Requested NSSAI is NSSAI that is sent from the UE 10 to the serving PLMN during the registration procedure, is sent through a control message exchanged between the UE 10 and the 5GC 30, and may include up to 8 pieces of S-NSSAI. By means of the Requested NSSAI, the 5GC 30 may select a serving AMF, a network slice, and a network slice instance.

The network slice instance may include a network function (NF) and resources (for example, calculation resources, storage resources, network resources, and the like) necessary to provide a network slice.

The network resources may include, for example, a cell, a beam, a DRB, a wireless resource, a frequency band (band), a channel band, a bandwidth part (BWP) provided by the base station, and frequency resources, a backhaul, a middle haul, a fronthaul, traffic resources thereof, and the like in those bands.

Requested NSSAI must be one of the following.
·Default Configured NSSAI
·Configured NSSAI
·Allowed NSSAI, or a part thereof
·NSSAI acquired by adding one or more S-NSSAI included in the allowed NSSAI or the configured NSSAI to a part thereof

The RAN/AN 20 may use Requested NSSAI for AS control information of the UE 10 before the allowed NSSAI is notified from the 5GC 30 to the RAN/AN 20 to process the control plane connection of the UE 10. Allowed NSSAI is, for example, NSSAI that the serving PLMN provides to the UE 10 during the registration procedure, and includes one or more S-NSSAI that can be utilized within the current registration area of the current serving PLMN.

### <5. registration procedure in 5GS>

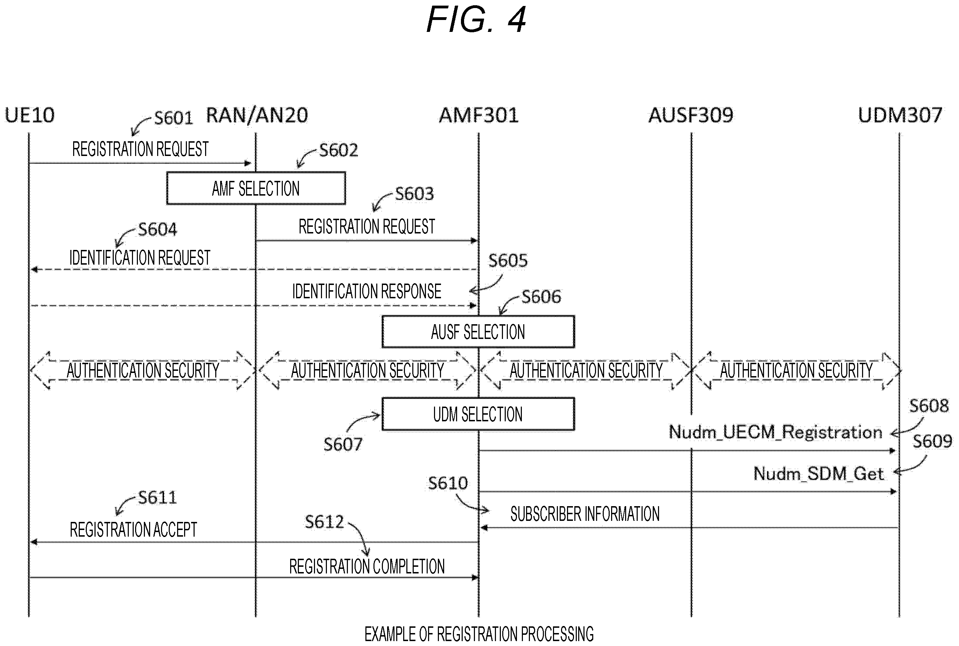

Fig. 4 is a diagram illustrating an example of a registration procedure in 5GS. First, the UE 10 in the non-registered state, that is, an RM-DEREGISTERED state with respect to the 5GC 30 transmits a registration request message to the RAN/AN 20 in order to perform initial registration (S601). At this time, the UE 10 transmits the registration request message including its own ID (Identity).

The ID of the UE 10 is 5G-GUTI mapped from EPS GUTI in the case of having a valid EPS GUTI (Global Unique Temporary Identifier). An evolved packet system (EPS) is a 4G system corresponding to long term evolution (LTE), and includes an eUTRAN (Evolved UMTS Terrestrial Radio Access Network) and an evolved packet core (EPC).

The EPS GUTI is a temporary ID used to identify the UE 10 in the EPS instead of an ID uniquely allocated to each UE such as an international mobile subscriber identity (IMSI) or an international mobile equipment identity (IMEI) from the viewpoint of security.

Alternatively, the ID of the UE 10 is a PLMN-specific 5G-GUTI that, if available, is allocated by the PLMN in which the UE 10 is attempting to register.

Alternatively, the ID of the UE 10 is a PLMN-specific 5G-GUTI that, if available, is allocated by a PLMM that is treated as an equivalent PLMN (Equivalent PLMN) to the PLMN in which the UE 10 is attempting to register.

Alternatively, the ID of the UE 10 is a PLMN-specific 5G-GUTI, if available, allocated by any PLMN.

Otherwise, the UE 10 includes the SUCI (Subscription Concealed Identifier) in the registration request message. The SUCI is an ID acquired by encrypting a subscription permanent identifier (SUPI) which is an ID uniquely allocated to each UE 10.

In a case where the UE 10 has configured NSSAI or allowd NSSAI for an arbitrary PLMN when registering in the 5GC 30 of the PLMN, the Requestd NSSAI described above needs to be provided to the 5GC 30.

Therefore, the UE 10 includes the Requested NSSAI in the registration request message, or includes the mapping between each S-NSSAI of the Requested NSSAI and each S-NSSAI of the HPLMN in the registration request message. As a result, whether or not the S-NSSAI included in the Requested NSSAI can be accepted on the basis of the subscribed S-NSSAI can be confirmed on the side of the 5GC 30.

In addition, in a case where the UE 10 uses the default configured NSSAI, the UE includes the default configured NSSAI indication in the registration request message.

Upon receiving the above registration request message, the RAN/AN 20 performs AMF selection (AMF Selection) (S602).

In a case where the registration request message does not include 5G-S-TMSI (5G S-Temporary Mobile Subscription Identifier) or GUAMI (Globally Unique AMF Identifier), the RAN/AN 20 selects the AMF 301 on the basis of RAT (Radio Access Technology)/AT (Access Technology) and Requested NSSAI if available.

Alternatively, in a case where 5G-S-TMSI or GUAMI included in the registration request message does not indicate a valid AMF 301, the RAN/AN 20 selects the AMF 301 on the basis of RAT/AT and Requested NSSAI if available.

In a case where the RAN/AN 20 is the NG-RAN, the RAN/AN 20 transfers a registration request including the selected PLMN ID or a registration request including a pair of a PLMN ID for identifying a standalone non-public network (SNPN) and a network identifier (NID) to the AMF 301 (S603).

In a case where the UE 10 has not provided SUCI to the AMF 301, the AMF 301 sends an identification request (Identity Request) message requesting the SUCI to the UE 10 (S604).

In a case where the above-described identification request message has been received, the UE 10 returns an identification response (Identity Response) message including the SUCI to the AMF 301 (S605). At this time, the UE 10 can acquire the SUCI by using the public key (Public Key) of the HPLMN.

The AMF 301 performs AUSF selection (AUSF Selection) on the basis of the SUPI or the SUCI (S606). The AMF 301 requests the selected AUSF 309 to authenticate the UE 10. Upon receiving the request for authentication from the AMF 301, the AUSF 309 authenticates the UE 10. The AUSF 309 selects the UDM 307 as the authentication procedure and acquires the authentication data from the UDM 307.

When the UE 10 is authenticated, the AUSF 309 provides information regarding security to the AMF 301. Upon receiving this, the AMF 301 initiates an NG Application Protocol (NGAP) procedure to provide the security context to the RAN/AN 20. Upon receiving this, the RAN/AN 20 retains the received security context and responds to the AMF 301. Hereinafter, the RAN/AN 20 uses this security context to protect messages exchanged with the UE 10.

The AMF 301 performs UDM selection (UDM Selection) on the basis of the SUPI (S607). The AMF 301 is registered to the selected UDM 307 using Nudm_UECM_Registration (S608).

In a case where the AMF 301 does not possess the subscriber information (Subscription Data) of the UE 10, the AMF uses Nudm_SDM_Get (S609) to acquire the subscriber information such as the access and mobility subscriber information (Access and Mobility Subscription data) and the SMF selection subscriber information (SMF Selection Subscription data) from the UDM 307 (S610).

Upon acquiring access and mobility subscriber information from the UDM 307, the AMF 301 generates a UE context. The access and mobility subscriber information includes information indicating whether or not NSSAI may be included in plaintext in RRC connection establishment with 3GPP access.

The AMF 301 transmits a registration accept message to the UE 10 (S611). The registration accept message includes 5G-GUTI and a registration area. The N1 message including the registration accept message includes allowed NSSAI.

The Allowed NSSAI includes only one of the following.
·One or more S-NSSAI that do not require authentication and authorization (Network Slice-Specific Authentication and Authorization) of the network slice based on subscriber information
·one or more S-NSSAI successfully authenticating and authorizing the network slice based on the UE context of the AMF 301

The AMF 301 may provide a list including one or more equivalent PLMNs to the UE 10 registered with a PLMN, but may not provide a list including one or more equivalent PLMNs to the UE 10 registered with a SNPN.

The UE 10 transmits a registration complete message to the AMF 301 to notify that a new 5G-GUTI is allocated (S612).

Through the registration procedure in Steps S601 to S612 described above, the UE 10 enters a registration state with respect to the 5GC 30, that is, the RM-REGISTERED state.

### <6. Standardized QoS features>

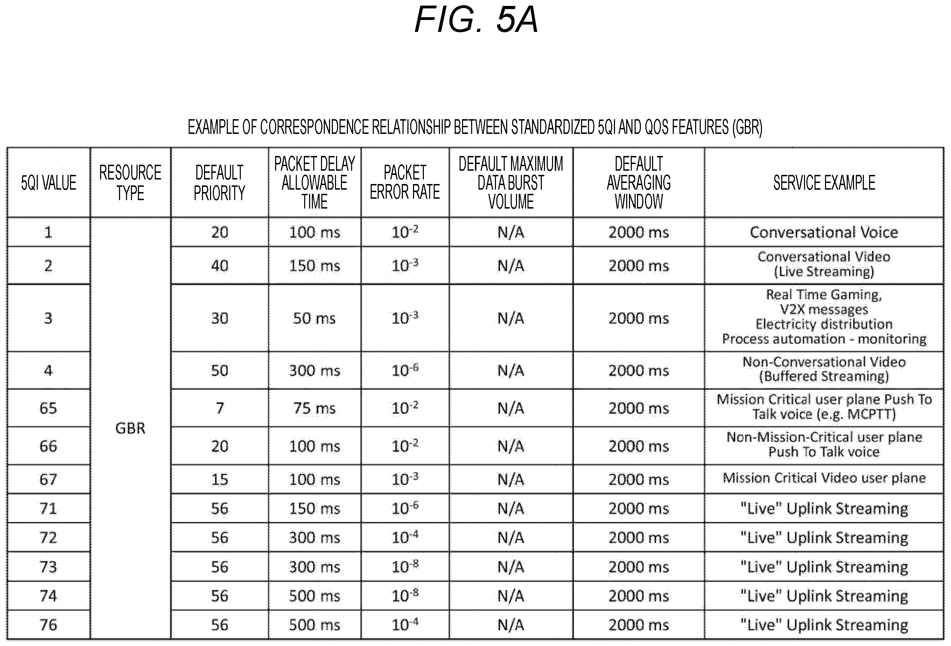

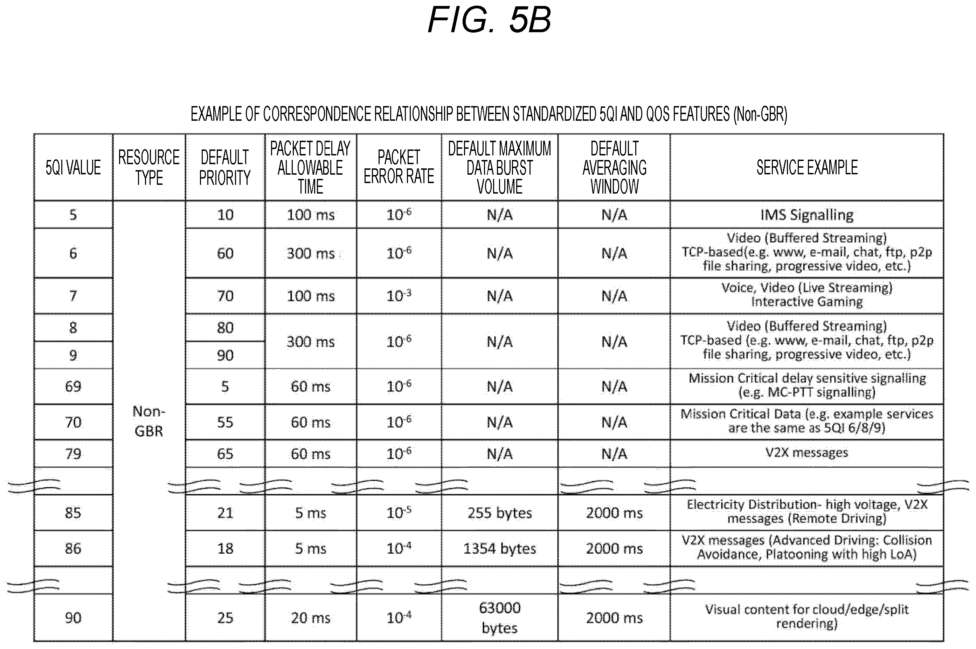

Figs. 5A and 5B are diagrams illustrating an example of a correspondence relationship between standardized 5QI and QoS features. The standardized QoS is characterized by a resource type (Resource Type), a default priority (Default Priority Level), a packet delay budget, a packet error rate (Packet Error Rate), a default maximum data burst volume (Default Maximum Data Burst Volume), and a default averaging window (Default Averaging Window).

The resource type is for determining whether or not a dedicated resource related to QoS flow-level GFBR is continuously allocated, and is classified into a GBR and a Non-GBR.

The GBR QoS flow uses either a GBR resource type (GBR Resource Type) or a delay critical GBR resource type (Delay-critical GBR Resource Type). The delay critical GBR resource type defines an upper limit value of the delay time as a delay request. The Non-GBR QoS flows use only non-GBR resource types (Non-GBR Resource Types).

The priority (Priority Level) is an index indicating a priority in scheduling of resources in the QoS flow. The standardized 5QI is associated with a default value of the priority. The priority may be signaled to the base station of the RAN/AN 20 in conjunction with the standardized 5QI. In the case of receiving the priority, the base station must use the received priority instead of the default value.

The packet delay budget (PDB) defines an upper limit of a delay between the UE 10 and the UPF 330 that terminates the N6 interface. For any 5QI, the values of the PDB are the same in uplink and downlink. For GBR QoS flows using GBR resource types that do not exceed GFBR (Guaranteed Flow Bit Rate), 98% of the packets must fall within the 5QI PDB.

The packet error rate (PER) defines an upper limit of a packet loss rate not caused by congestion. For a GBR QoS flow using the delay critical GBR resource type, packets that are delayed by the PDB or more are counted as lost and included in PER unless the data burst exceeds a maximum data burst volume (Maximum Data Burst Volume) within the duration of the PDB or the QoS flow exceeds GFBR.

The maximum data burst volume (MDBV) represents the maximum amount of data required to be processed by the RAN/AN 20 within the period of the PDB. A GBR QoS flow of a delay critical GBR resource type must be associated with an MDBV. The standardized 5QI of the delay critical GBR resource type is associated with a default value of the MDBV. The MDBV may be signaled to the base station of the RAN/AN 20 in conjunction with the standardized 5QI. In the case of receiving the MDBV, the base station must use the received MDBV instead of the default value.

The averaging window represents a period for calculating a guaranteed flow bit rate (GFBR) and a maximum flow bit rate (MFBR). GBR QoS flows must be associated with an average window. The standardized 5QI for GBR and delay critical GBR resource types is associated with the default value of the average window. The average window may be signaled to the base station and the UPF 330 of the RAN/AN 20 in conjunction with the standardized 5QI. In the case of receiving the average window, the base station and the UPF 330 must use the received average window instead of the default value.

### <7.5 connection procedure in GS>

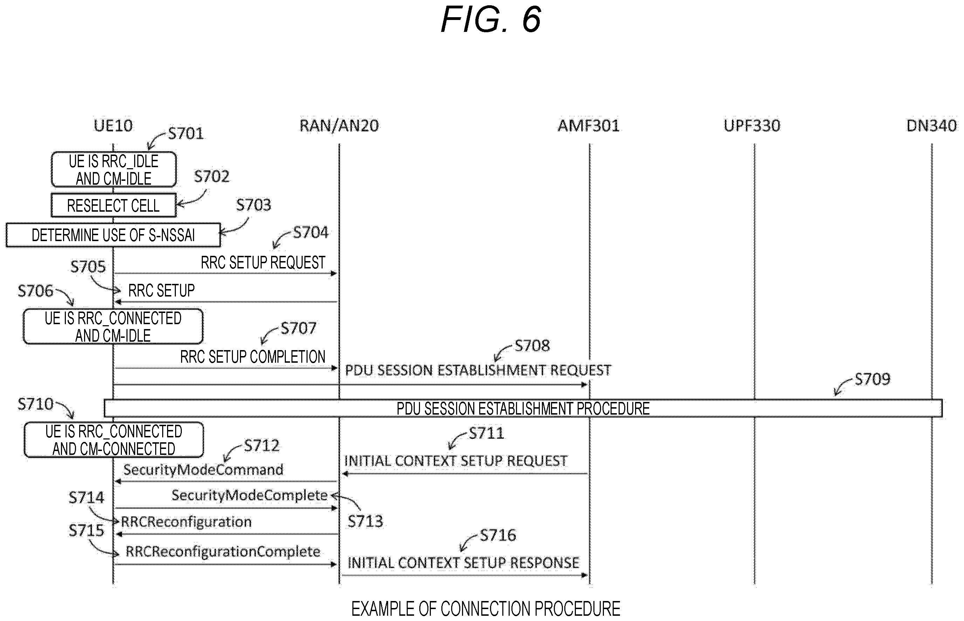

Fig. 6 is a diagram illustrating an example of connection procedure in 5GS. The UE 10 (S701) in the RRC_IDLE and CM-IDLE states performs cell reselection (S702), and camps on an appropriate cell that satisfies predetermined criteria.

The UE 10 determines the use of the S-NSSAI corresponding to the application to be used from the allowed NSSAI (S703). Subsequently, the UE 10 transmits an RRC setup request (RRC Setup Request) message to the RAN/AN 20 of the base station that manages the camped-on cell (S704).

Upon receiving this, the RAN/AN 20 transmits an RRC setup (RRC Setup) message to the UE 10 (S705). The UE 10 transitions to the state of RRC_CONNECTED and CM-IDLE (S706), and returns an RRC setup complete message to the RAN/AN 20 (S707). As a result, the RRC setup procedure is completed.

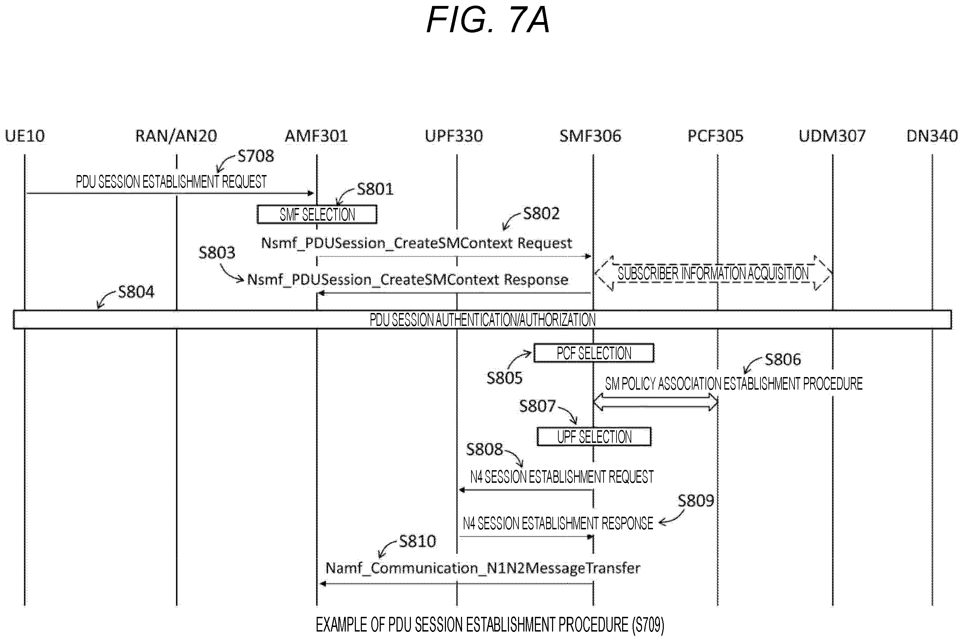

Next, the UE 10 transmits a PDU SESSION ESTABLISHMENT REQUEST message which is a NAS message to the AMF 301 (S708). As a result, a PDU session establishment procedure through the RAN/AN 20 and the UPF 330 is performed between the UE 10 and the DN 340 (S709). Details of the PDU session establishment procedure will be described later with reference to Fig. 7A to Fig. 7B.

The UE 10 transitions to the RRC_CONNECTED and CM-CONNECTED states (S710). Note that the PDU SESSION ESTABLISHMENT REQUEST message can include S-NSSAI selected by the UE 10.

The AMF 301 transmits an INITIAL CONTEXT SETUP REQUEST message to the RAN/AN 20 (S711). The INITIAL CONTEXT SETUP REQUEST message includes a PDU session context, a security key, a UE wireless capability, a UE security capability, and the like. In addition, the INITIAL CONTEXT SETUP REQUEST message includes Allowed NSSAI, and can further include S-NSSAI for each PDU session.

The RAN/AN 20 configures the UE context of the UE 10 and transmits a security mode command message to the UE 10 (S712). The security mode command message includes an integrity algorithm selected by the RAN/AN 20.

The UE 10 verifies the integrity of the received Security Mode Command message to confirm the validity of the message, and returns a Security Mode Complete message to the RAN/AN 20 (S713).

The RAN/AN 20 transmits an RRC Reconfiguration message to the UE 10 in order to configure a signaling radio bearer (SRB) 2 and a data radio bearer (DRB) (S714). Upon receiving this message, the UE 10 returns an RRC Reconfiguration Complete message to the RAN/AN 20 (S715). As a result, the SRB 2 and the DRB are established between the UE 10 and the RAN/AN 20.

The RAN/AN 20 transmits an INITIAL CONTEXT SETUP REQUEST RESPONSE message to the AMF 301 to notify that the UE context configuration procedure is completed (S716).

Figs. 7A to 7B are diagrams illustrating an example of the PDU session establishment procedure in Step S709 of Fig. 6, which is activated by the PDU SESSION ESTABLISHMENT REQUEST message. Upon receiving the PDU session establishment request message from the UE 10 (S708), the AMF 301 performs SMF selection (SMF Selection) (S801).

The AMF 301 sends an Nsmf_PDUSession_Create_SMContext Request message to the selected SMF 306 (S802). The Nsmf_PDUSession_Create_SMContext Request message includes SUPI and S-NSSAI, and UE Requested DNN or DNN.

In a case where the session management subscriber information (Session Management Subscription Data) corresponding to the SUPI, the S-NSSAI, and the DNN is not available, the SMF 306 acquires the session management subscriber information from the UDM 307 by using the Nudm_SDM_Get message. In addition, the SMF 306 registers in the UDM 307 using the Nudm_SDM_Subscribe message in order to be notified at the time of updating the session management subscriber information.

The SMF 306 that has received the Nsmf_PDUSession_Create_SMContext Request message generates an SM context in a case where the message can be processed. The SMF 306 returns an Nsmf_PDUSession_Create_SMContext Response message including the SM context ID to the AMF 301 (S803).

In a case where the second authentication and consent procedure by the DN-AAA server needs to be performed during the PDU session establishment procedure, the SMF 306 initiates PDU session authentication/authorization (S804).

The SMF 306 performs PCF selection (PCF Selection) in a case where dynamic policy and charging control (PCC) is applied to the PDU session to be established (S805). Alternatively, the SMF 306 may apply a local policy.

Furthermore, the SMF 306 may also perform SM policy association establishment procedure (SM Policy Association Establishment Procedure), to establish an SM policy association (SM Policy Association) with the PCF 305, to acquire a default PCC rule for the PDU session (S806). As a result, the PCC rule can be acquired before selecting the UPF 330.

The SMF 306 performs UPF selection (UPF Selection) according to a preset rule or the PCC rule acquired in the foregoing Step S806, to select one or more UPFs 330 (S807). The SMF 306 transmits an N4 session establishment request (N4 Session Establishment Request) message to the selected UPF 330 (S808).

Setup of an N4 rule for controlling uplink and downlink traffic in the UPF 330 is performed through the N4 session establishment request message. The N4 rule is information related to, for example, packet detection rule (PDR), forwarding action rule (FAR), QoS enforcement rule (QER), usage reporting rule (URR), buffering action rule (BAR), and the like.

The PDR includes information necessary for classifying a packet in the UPF 330. The FAR includes information related to a processing method for a specific packet, for example, forward, duplication, drop, buffer, or the like. QER includes information related to an indication of QoS applied to traffic. The URR includes information necessary for traffic measurement and reporting. The BAR includes a period and an amount of data to be buffered, and information related to a notification method in the control plane.

Upon receiving the N4 session establishment request, the UPF 330 returns an N4 session establishment response (N4 Session Establishment Response) message to the SMF 306 (S809). Note that, in a case where a plurality of UPFs 330 is selected for the PDU session in Step S807 described above, the N4 session establishment procedure is activated for each UPF 330.

The SMF 306 sends a Namf_Communication_N1N2 MessageTransfer message to the AMF 301 (S810). The Namf_Communication_N1N2 MessageTransfer message includes a PDU session ID, N2 SM information (N2 SM Information), CN tunnel information (CN Tunnel Info), S-NSSAI, and an N1 SM container (N1 SM Container).

The N2 SM information includes a PDU session ID, the QFI, a QoS profile, and the like.

In a case where a plurality of UPFs 330 is used for the PDU session, the CN tunnel information includes tunneling information (Tunnel Information) related to the plurality of UPFs 330 terminating N3.

The N1 SM container includes a PDU session establishment accept and a QoS rule that the AMF 301 must provide to the UE 10. The PDU session establishment accept includes S-NSSAI.

The Namf_Communication_N1N2 MessageTransfer message includes a PDU session ID so that the AMF 301 knows which access to use for the UE 10.

The AMF 301 sends an N2 PDU session request (N2 PDU Session Request) message to the RAN/AN 20 (S811). The N2 PDU session request message includes a PDU session ID with the UE 10 as a destination, a NAS message including an N1 SM container, and N2 SM information received from the SMF 306.

The RAN/AN 20 acquires the PDU session ID, the QFI, the QoS profile, and the like from the N2 SM information included in the N2 PDU session request message. In addition, the RAN/AN 20 transfers the NAS message included in the N2 PDU session request message to the UE 10 (S812). As described above, the NAS message includes the PDU session ID and the N1 SM container, and the N1 SM container includes the PDU session establishment accept and the QoS rule.

In addition, the RAN/AN 20 allocates AN tunnel information (AN Tunnel Info) to the PDU session. Here, the AN tunnel information includes a tunnel endpoint of each involved RAN/AN node and QFIs allocated to each tunnel endpoint. The RAN/AN 20 updates the N2 SM information to notify the SMF 306. Here, the N2 SM information includes information such as a PDU session ID, AN tunnel information, a list of accepted or denied QFI (s), and User Plane Enforcement Policy Notification.

The RAN/AN 20 returns an N2 PDU session response (N2 PDU Session Response) message including N2 SM information to the AMF 301 (S813).

The AMF 301 acquires N2 SM information through the N2 PDU session response received from the RAN/AN 20, and forwards the Nsmf_PDUSession_UpdateSMContext Request message including the SM context ID and the acquired N2 SM information to the SMF 306 (S814).

The SMF 306 invokes an N4 session modification procedure (N4 Session Modification Procedure) with the UPF 330, and sends an N4 session modification request (N4 Session Modification Request) message to the UPF 330 (S815). The SMF 306 provides the UPF 330 with the AN tunnel information in addition to the forwarding rule.

The UPF 330 returns an N4 session modification response (N4 Session Modification Response) message to the SMF 306 (S816). Note that, in a case where a plurality of UPFs 330 is used in the PDU session, the above session change procedure is performed on all the UPFs 330 that terminate N3. With the above processing, the PDU session establishment procedure in Step S709 of Fig. 6 is completed.

### <8. Relationship between S-NSSAI, QoS, and PDU sessions>

In the service such as XR illustrated in Fig. 2, it is required to handle data having a relatively small capacity such as pose information and inertial information and data having a large capacity such as XR media in one application. In addition, it is desirable that different QoS controls can be applied according to the type of data.

In order to realize such a service, it is considered to map a plurality of QoS flows, that is, a plurality of 5QIs, to one network slice, that is, one S-NSSAI, associated with one PDU session.

According to the current 5GS specification (3GPP TS 23.501), one S-NSSAI and one DNN are associated with one PDU session according to the PDU session establishment procedure shown in Fig. 7A to Fig. 7B. In addition, as described in Fig. 3, the RAN/AN 20 grasps the 5QI applied to each QoS flow identified by the QFI through the QoS profile configured for each QFI.

Even in the current 5GS specification, a plurality of QoS flows can be handled in one PDU session. Therefore, a plurality of 5QIs can be mapped to one S-NSSAI by allocating a plurality of QFIs to one S-NSSAI and setting a QoS profile including 5QIs for each QFI.

However, in the value of each of the standardized 5QIs illustrated in Figs. 5A and 5B, QoS features such as a resource type, a default priority, a packet delay allowable time, a packet error rate, a default maximum data burst amount, and a default average window are defined assuming services such as "Conversational Voice" and "Real Time Gaming".

Therefore, a case is also assumed in which one 5QI is mapped to one S-NSSAI to provide a service. In that case, one QFI is allocated to one S-NSSAI, and one 5QI is mapped to one S-NSSAI by setting a QoS profile including the 5QI to the QFI.

In this way, it is considered that the mapping between the S-NSSAI and the 5QI depends on the operation in the PLMN. Therefore, it is also conceivable that the S-NSSAI and the 5QI are mapped one-to-one or one-to-many.

In addition, it is also conceivable to statically map the S-NSSAI and the 5QI by fixing the content of the QoS profile set to a certain QFI, or it is also conceivable to dynamically map the S-NSSAI and the 5QI by updating the content of the QoS profile set to another QFI at any time.

### <9. Subscription using network slice>

As described above, the subscription information must include one or more S-NSSAI, that is, subscribed S-NSSAI. At this time, regarding the subscription by the user using the network slice, a method of subscribing in units of service (that is, the S-NSSAI unit) and a method of subscribing in units of 5QI can be considered.

Further, in order to perform the QoS control in units of 5QIs illustrated in Figs. 5A and 5B, the PLMN which is a communication carrier needs to set a QoS profile for each QFI and map the QFI and the 5QI on a one-to-one basis. As described above, the QoS profile set for each QFI includes the 5QI corresponding to the QFI.

In the following description, for example, it is assumed that a value 1 of the 5QI in Fig. 5A is mapped to QFI_1, and a value 5 of the 5QI in Fig. 5B is mapped to QFI_5. Furthermore, hereinafter, the value of 5QI is described as, for example, "5QI (1)".

### (9-1. Case of subscribing on a per-service basis)

The user subscribes on a per-service basis to a PLMN that is a telecommunications carrier. The service is, for example, a call service, a general data service, a music streaming service, a video streaming service, a live streaming service (downlink), a live streaming service (uplink), an XR service, a V2X service, or the like.

The communication carrier allocates unique S-NSSAI for each of these services, allocates one or more QFIs to the unique S-NSSAI, and sets a QoS profile including 5QIs for each QFI. For example, S-NSSAI_1 is allocated to the call service, and the QFI_1 is allocated to the S-NSSAI_1. Further, S-NSSAI_2 is allocated to the general data service, and QFI_8 is allocated to the S-NSSAI_2. Further, S-NSSAI_X is allocated to the XR service, and QFI_3, QFI_65, and QFI_7 are allocated to the S-NSSAI_X, for example.

The user subscribes on a per-service basis to the PLMN that is a telecommunications carrier. For example, a user A subscribes to a call service and a general data service. In addition, the user B subscribes to the call service, the general data service, and the XR service.

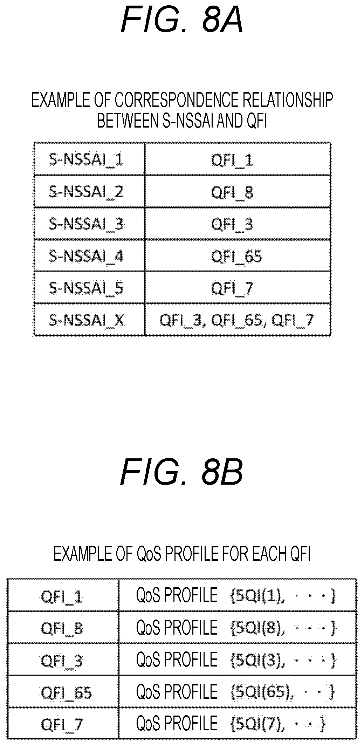

The telecommunication carrier stores subscription information for each user in the UDM 307. For example, as the subscription information of the user A, subscription information including the S-NSSAI_1 corresponding to the call service and the S-NSSAI_2 corresponding to the general data service is stored in the UDM 307. In addition, as the subscription information of the user B, the subscription information including the S-NSSAI_1 corresponding to the call service, the S-NSSAI_2 corresponding to the general data service, and the S-NSSAI_X corresponding to the XR service is stored in the UDM 307. In addition, the communication carrier stores information on a correspondence relationship between the S-NSSAI and the QFI (see Fig. 8A) and information on the QoS profile for each QFI (see Fig. 8B) in the PCF 305 as a part of a policy and charging control rule (PCC rule).

When the user A executes the registration procedure of Fig. 4, as a result of Step S611, the UE 10 acquires allowed NSSAI including, for example, the S-NSSAI_1 and the S-NSSAI_2. In a case where the user A intends to use the XR service, the S-NSSAI_X corresponding to the XR service is not included in Allowed NSSAI, and thus, it is not possible to perform a PDU session establishment request corresponding to the S-NSSAI_X. However, the user A can use the XR service through the PDU session corresponding to the S-NSSAI_2, which is a general data service with poor service quality.

On the other hand, a user B executes the registration procedure of Fig. 4, and then as a result of Step S611, the UE 10 acquires Allowed NSSAI including, for example, the S-NSSAI_1, the S-NSSAI_2, and the S-NSSAI_X. Then, in a case where the user B intends to use the XR service, the UE 10 selects the S-NSSAI_X corresponding to the XR service from the allowed NSSAI and activates the connection procedure of Fig. 6.

In Step 708 of Fig. 6, the UE 10 sends the PDU SESSION ESTABLISHMENT REQUEST message including the S-NSSAI_X to the AMF 301, and then the AMF 301 acquires the subscription information about the user B from the UDM 307.

When the AMF 301 confirms that the user B has a subscription to use the XR service (S-NSSAI_X) on the basis of the acquired subscription information, the AMF performs the connection procedure in and after Step S709 including the PDU session establishment procedure.

In the process of this connection procedure, the 5GC 30 selects the SMF 306 and the UPF 330 as a network slice instance necessary for providing the S-NSSAI_X.

The SMF 306 acquires the QoS profile corresponding to the S-NSSAI_X from the PCF 305. Here, the QoS profile corresponding to the S-NSSAI_X is a QoS profile of QFI_3, a QoS profile of QFI_65, and a QoS profile of QFI_7.

The RAN/AN 20 acquires, through the AMF 301, a QoS profile corresponding to the S-NSSAI_X, that is, a QoS profile of QFI_3, a QoS profile of QFI_65, and a QoS profile of QFI_7, from the SMF 306 selected to provide XR services (S-NSSAI_X).

In addition, the SMF 306 provides, through the above-described N4 rule, the UPF 330 with a rule necessary for classifying each QoS flow to which different QFIs (that is, QFI_3, QGFI_65, and QFI_7) are mapped and a rule for mapping the QFI to the 5QI. For example, a rule required for classification of the QoS flows is provided as a packet detection rule (PDR). In addition, a rule for mapping the QFI is provided as QoS enforcement rule (QER).

### (9-2. Case of subscribing in 5QI unit)

The user makes a subscription with PLMN, which is a telecommunications carrier, in units of 5QI. The 5QI is, for example, a standardized 5QI illustrated in Figs. 5A and 5B. For example, the telecommunication carrier prepares a basic plan supporting 5QI (1), 5QI (8), and 5QI (9), and a premium plan supporting 5QI (2), 5QI (3), 5QI (4), 5QI (65), 5QI (66), 5QI (67), 5QI (72), 5QI (76), 5QI (5), 5QI (6), and 5QI (7) in addition to 5QI supported by the basic plan. In addition, as an option, 5QI (86) corresponding to V2X, a smart grid, and the like can be added to these plans. The user may subscribe to the PLMNs on a 5QI basis by subscribing to the addition of a basic or premium plan or even an option.

The communication carrier allocates the unique S-NSSAI for each service, and allocates one or a plurality of QFIs to the unique S-NSSAI. The service is, for example, a call service, a general data service, a music streaming service, a video streaming service, a live streaming service (downlink), a live streaming service (uplink), an XR service, a V2X service, or the like.

Similarly to the case of subscribing on a per-service basis, for example, the S-NSSAI_1 is allocated to the call service, and the QFI_1 is allocated to the S-NSSAI_1. Further, the S-NSSAI_2 is allocated to the general data service, and the QFI_8 is allocated to the S-NSSAI_2. Further, the S-NSSAI_X is allocated to the XR service, and the QFI_3, the QFI_65, and the QFI_7 are allocated to the S-NSSAI_X, for example.

The user makes a subscription with the PLMN, which is a telecommunications carrier, in units of 5QI. For example, the user A subscribes to the basic plan. In addition, the user B subscribes to the premium plan.

The telecommunication carrier stores subscription information for each user in the UDM 307. For example, the subscription information including the 5QI (1), the 5QI (8), and the 5QI (9) supported by the basic plan is stored in the UDM 307 as the subscription information of the user A. In addition, as the subscription information of the user B, the subscription information including the 5QI (2), the 5QI (3), the 5QI (4), the 5QI (65), the 5QI (66), the 5QI (67), the 5QI (72), the 5QI (76), the 5QI (5), the 5QI (6), and the 5QI (7) supported by the premium plan is stored in the UDM 307. In addition, the communication carrier stores, as a part of the PCC rule, information on a correspondence relationship between the S-NSSAI and the QFI (see Fig. 8A) and information on the QoS profile for each QFI (see Fig. 8B) in the PCF 305.

The user A executes the registration procedure of Fig. 4, and then in Step S610, the AMF 301 acquires subscription information including the 5QI (1), the 5QI (8), and the 5QI (9) supported by the basic plan from the UDM 307. In addition, the AMF 301 acquires information on a correspondence between the S-NSSAI and the QFI from the PCF 305. Then, upon confirming that the S-NSSAI_1 and the S-NSSAI_2 can be supported by the 5QI (1), the 5QI (8), and the 5QI (9), the AMF 301 generates Allowed NSSAI including the S-NSSAI_1 and the S-NSSAI_2. As a result of Step S611, the UE 10 acquires allowed NSSAI including the S-NSSAI_1 and the S-NSSAI_2.

In a case where the user A intends to use the XR service, the S-NSSAI_X corresponding to the XR service is not included in Allowed NSSAI, and thus, it is not possible to perform a PDU session establishment request corresponding to the S-NSSAI_X. However, the user A can use the XR service through the PDU session corresponding to the S-NSSAI_2, which is a general data service with poor service quality.

On the other hand, the user B executes the registration procedure of Fig. 4, and then in Step S610, the AMF 301 acquires, from the UDM 307, the subscription information including the 5QI (1), the 5QI (2), the 5QI (3), the 5QI (4), the 5QI (65), the 5QI (66), the 5QI (67), the 5QI (72), the 5QI (76), the 5QI (5), the 5QI (6), the 5QI (7), the 5QI (8), and the 5QI (9) supported by the premium plan. In addition, the AMF 301 acquires information on a correspondence between the S-NSSAI and the QFI from the PCF 305.

Upon confirming that the S-NSSAI_1, the S-NSSAI_2, and the S-NSSAI_X can be supported by the 5QI (1), the 5QI (2), the 5QI (3), the 5QI (4), the 5QI (65), the 5QI (66), the 5QI (67), the 5QI (72), the 5QI (76), the 5QI (5), the 5QI (6), the 5QI (7), the 5QI (8), and the 5QI (9), the AMF 301 generates Allowed NSSAI including the S-NSSAI_1, the S-NSSAI_2, and the S-NSSAI_X. As a result of Step S611, the UE 10 acquires allowed NSSAI including the S-NSSAI_1, the S-NSSAI_2, and the S-NSSAI_X.

Then, in a case where the user B intends to use the XR service, the UE 10 selects the S-NSSAI_X corresponding to the XR service from the allowed NSSAI and activates the connection procedure of Fig. 6.

In Step S708 of Fig. 6, the UE 10 sends the PDU SESSION ESTABLISHMENT REQUEST message including the S-NSSAI_X to the AMF 301, and then the AMF 301 acquires the subscription information about the user B from the UDM 307.

The AMF 301 confirms that the user B has a subscription to use the 5QI (3), the 5QI (65), and the 5QI (7) supporting the XR service (S-NSSAI_X) on the basis of the acquired subscription information, and then the AMF performs the connection procedure in and after Step S709 including the PDU session establishment procedure.

In the process of this connection procedure, the 5GC 30 selects the SMF 306 and the UPF 330 as the network slice instance necessary for providing the S-NSSAI_X.

The SMF 306 acquires the QoS profile corresponding to the S-NSSAI_X from the PCF 305. Here, the QoS profile corresponding to the S-NSSAI_X is a QoS profile of QFI_3, a QoS profile of QFI_65, and a QoS profile of QFI_7.

The RAN/AN 20 acquires, through the AMF 301, a QoS profile corresponding to the S-NSSAI_X, that is, a QoS profile of QFI_3, a QoS profile of QFI_65, and a QoS profile of QFI_7, from the SMF 306 selected to provide XR services (S-NSSAI_X).

In addition, the SMF 306 provides, through the above-described N4 rule, the UPF 330 with a rule necessary for classifying each QoS flow to which different QFIs (that is, QFI_3, QGFI_65, and QFI_7) are mapped and a rule for mapping the QFI to the 5QI. For example, the rules required for QoS flow classification are provided as PDRs. In addition, a rule for mapping the QFI is provided as a QER.

### <10. Request for setting up a network slice to support multiple QoS flows>

In the above chapter 9, an example in which the PLMN as a communication carrier allocates a plurality of QFIs to an arbitrary network slice in advance has been described. In the future, it is expected that use cases for realizing one application by combining a plurality of QoS flows like XR service will increase. In addition, it is expected that there are various types of QoS to be combined at that time. In addition, depending on the situation of the traffic processed by the base station included in the RAN/AN 20, it may be necessary to dynamically change the QoS to be combined. Therefore, a mechanism (framework) for dynamically setting the network slice supporting a plurality of QoS flows according to an application to be used is required.

### (10-1. UE activation network slice setup request)

It is assumed that the user has a subscription with the PLMN, which is a telecommunications carrier, on a per-service (that is, the S-NSSAI unit) basis or a per-5QI basis. Furthermore, in the XR service of Fig. 2, the UE 10 operating as the XR device 50 performs configuration for handling, in one application, a first QoS flow related to relatively small capacity data such as pose information and inertial information transmitted from the XR device 50 to the XR server 60, a second QoS flow related to data in a high-resolution format of XR media received by the XR device 50 from the XR server 60, and a third QoS flow related to data in a low-resolution format of XR media received by the XR device 50 from the XR server 60.

### (10-1-1. Case where subscription is made on per-service basis)

The UE 10 can grasp the service subscribed to the UE itself through the Default Configured NSSAI set in the UE itself. The Default Configured NSSAI includes the S-NSSAI corresponding to one or more services for which the Default Configured NSSAI is subscribed.

For example, the UE 10 subscribes to real-time gaming (S-NSSAI_3), a mission critical user plane (S-NSSAI_4), and live streaming (S-NSSAI_5), in addition to the call service (S-NSSAI_1) and the general data service (S-NSSAI_2).

The QFI_1 is allocated to the S-NSSAI_1 corresponding to the call service. The QFI_8 is allocated to the S-NSSAI_2 corresponding to the general data service. The QFI_3 is allocated to the S-NSSAI_3 corresponding to real-time gaming. The QFI_65 is allocated to the S-NSSAI_4 corresponding to the mission critical user plane. The QFI_7 is allocated to the S-NSSAI _5 corresponding to live streaming.

The QoS profile set in the QFI_1 includes the 5QI (1). The QoS profile set in the QFI_8 includes the 5QI (8). The QoS profile set in the QFI_3 includes the 5QI (3). The QoS profile set in the QFI_65 includes the 5QI (65). The QoS profile set in the QFI_7 includes the 5QI (7) .

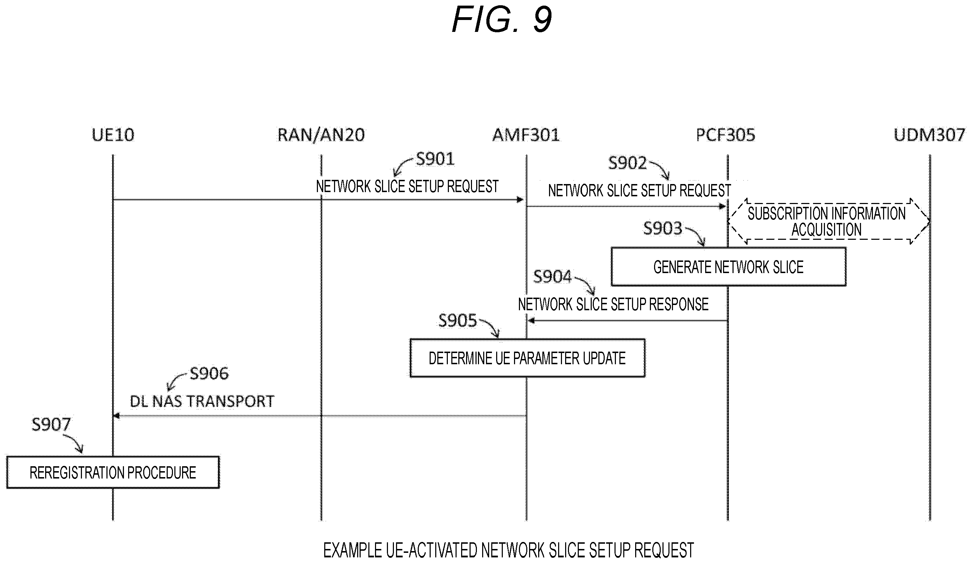

Fig. 9 is a diagram illustrating an example of a UE-activated network slice setup request. The UE 10 transmits the NAS message including a network slice setup request (Network Slice Setup Request) to the AMF 301 through the RAN/AN 20 in order to request the configuration of a network slice supporting a plurality of QoS flows (S901).

The UE 10 can select two or more pieces of S-NSSAI from a plurality of pieces of S-NSSAI included in the Default Configured NSSAI or the Allowed NSSAI and include the two or more pieces of S-NSSAI in the network slice setup request as information necessary for setting the network slice. For example, in the case of trying to use the XR service, the UE 10 selects the S-NSSAI_3 corresponding to the real-time gaming, the S-NSSAI_4 corresponding to the mission critical user plane, and the S-NSSAI_5 corresponding to the live streaming, and includes them in the network slice setup request.

The AMF 301 forwards the network slice setup request received from the UE 10 to the PCF 305 (S902). The PCF 305 acquires the subscription information of the service unit (that is, the S-NSSAI unit) of the UE 10 from the UDM 307, and confirms that the UE 10 has a subscription using the real-time gaming (S-NSSAI_3), the mission critical user plane (S-NSSAI_4), and the live streaming (S-NSSAI_5).

In response to the network slice setup request, the PCF 305 generates a network slice (S-NSSAI_XR) to which the QFI_3, the QFI_65, and the QFI_7 corresponding to the S-NSSAI_3, the S-NSSAI_4, and the S-NSSAI_5 are allocated (S903).

1
Here, the S-NSSAI_X in Chapter 9 -1 described above has been set in advance by the communication carrier and stored in the PCF 305. In contrast, it should be noted that the S-NSSAI_XR in chapter 10-1-1 of this document is dynamically set by the PCF 305 prior to the PDU session establishment procedure in response to a request from the UE 10.

The PCF 305 returns the network slice setup response (Network Slice Setup Response) including the generated network slice (S-NSSAI_XR) to the AMF 301 (S904). In addition, the PCF 305 may request the UDM 307 to hold information related to this network slice (S-NSSAI_XR) generated for the UE 10 in the UDR.

Upon receiving the network slice setup response, the AMF 301 determines parameter update of the UE 10 (S905). The AMF 301 transmits the updated configured NSSAI including the network slice (S-NSSAI_XR) to the UE 10 through the DL NAS TRANPORT message (S906).

Upon receiving the updated configured NSSAI, the UE 10 updates its own configured NSSAI. In a case where the AMF 301 requests the UE 10 to re-register, the UE 10 executes the registration procedure of Fig. 4 again on the basis of the updated configured NSSAI (S907).

Alternatively, the AMF 301 may notify the UE 10 of the update of the allowed NSSAI in Step S906 without requesting the UE 10 to re-register. Specifically, the AMF 301 may add the S-NSSAI_XR to the allowed NSSAI of the UE 10, and send the updated allowed NSSAI to the UE 10 through the DL NAS TRANSPORT message.

Note that, instead of the PCF 305 acquiring the subscription information from the UDM 307 and generating the network slice (S-NSSAI_XR) to which a plurality of QFIs is allocated, the UDM 307 may generate the network slice (S-NSSAI_XR) and request the PCF 305 to generate the QoS profile required by the network slice (S-NSSAI_XR).

Following the above procedure, the UE 10 can process a plurality of QoS flows (that is, the QoS flow corresponding to the QFI_3, the QoS flow corresponding to the QFI_65, and the QoS flow corresponding to the QFI_7) by executing the PDU session establishment procedure of Figs. 7A to 7B and establishing one PDU session corresponding to the S-NSSAI_XR included in the allowed NSSAI.

For example, in the XR service illustrated in Fig. 2, the UE 10 allocates the QFI_65 to the first QoS flow related to relatively small capacity data such as pose information and inertial information, allocates the QFI_3 to the second QoS flow related to data in the high-resolution format of the XR media, and allocates the QFI_7 to the third QoS flow related to data in the low-resolution format of the XR media.

Alternatively, the UE 10 allocates the QFI_65 to the first QoS flow related to relatively small capacity data such as pose information and inertial information, allocates the QFI_3 to the second QoS flow related to data in a central area of the display area of the XR medium, and allocates the QFI_7 to the third QoS flow related to data in an area away from the center of the display area of the XR medium.

As described above, the UE 10 according to chapter 10-1-1 of this document transmits the network slice setup request that maps a plurality of QoS flows to one network slice associated with one PDU session (S901). As a result, the UE 10 receives the DL NAS TRANSPORT message including the S-NSSAI_XR allocated to one network slice to which the plurality of QoS flows is mapped (S906). Thereafter, the UE 10 establishes one PDU session associated with one network slice to which a plurality of QoS flows is mapped (S709). In this way, a mechanism (framework) for dynamically setting a network slice supporting a plurality of QoS flows by UE activation is provided.

The UE 10 allocates S-NSSAI as identification information for each of the plurality of QoS flows, and maps data transmitted and received on one PDU session to any one of the plurality of QoS flows on the basis of the identification information. In this way, the UE 10 may utilize network slices that support a plurality of QoS flows.

Note that, as a first modification, the UE 10 may select a plurality of pieces of S-NSSAI that can be used by the UE itself on the basis of the subscription information, and include the plurality of selected pieces of S-NSSAI, their relative priorities, and the number of QoS flows to be processed as information necessary for the network slice setup in the network slice setup request transmitted in Step S901.

For example, the UE 10 selects the S-NSSAI_1, the S-NSSAI_2, the S-NSSAI_3, the S-NSSAI_4, and the S-NSSAI_5 as a plurality of pieces of S-NSSAI that can be used by the UE itself. In addition, the UE 10 sets the relative priorities of the S-NSSSI_3, the S-NSSAI_4, the S-NSSAI_5, the S-NSSAI_2, and the S-NSSAI_1 in this order. In addition, the UE 10 sets 3 (that is, three of the first QoS flow, the second QoS flow, and the third QoS flow are:) as the number of QoS flows to be processed.

Upon receiving the network slice setup request from the UE 10, the AMF 301 selects the S-NSSAI of a number equal to the number of QoS flows to be processed on the basis of the plurality of available S-NSSAI, the relative priorities of the plurality of S-NSSAI, and the number of QoS flows to be processed included in the message and in consideration of a load status of the current traffic and the like. Here, the traffic load status can be determined from, for example, the status of GFBR of each GBR QoS flow acquired from the RAN/AN 20 or the AMBR for the non-GBR QoS flow. Further, as the AMBR, the UE-AMBR for each UE may be acquired from the RAN/AN 20, or the Session-AMBR for each PDU session may be acquired from the UPF 330.

For example, the AMF 301 selects the S-NSSAI_2 instead of the S-NSSAI_3 and the S-NSSAI_4 and the S-NSSAI_5 in a case where the S-NSSAI_5 cannot be supported due to a current traffic load situation or the like. Then, the AMF 301 transmits the network slice setup request including the selected three S-NSSAIs to the PCF 305 (S902).

According to such a procedure, in a case where there is the S-NSSAI that cannot be supported due to a current traffic load situation or the like, the AMF 301 can select a necessary number of S-NSSAI by filtering the S-NSSAI and selecting other available S-NSSAI instead.

Furthermore, as a second modification, in the network slice setup request transmitted in Step S901, the UE 10 may select at least one available S-NSSSAI on the basis of the subscription information for each QoS flow processed by the application, set the relative priority of each of the selected S-NSSAI, generate a list including the S-NSSAI with the relative priority, and include the list as information necessary for setting the network slice.

For example, the UE 10 generates a list in which priority is allocated to the first QoS flow in the order of the S-NSSAI_4, the S-NSSAI_2, and the S-NSSAI_1. In addition, the UE 10 generates a list in which priority is allocated to the second QoS flow in the order of the S-NSSAI_3, the S-NSSAI_2, and the S-NSSAI_1. In addition, the UE 10 generates a list in which priority is allocated to the third QoS flow in the order of the S-NSSAI_5, the S-NSSAI_2, and the S-NSSAI_1.

### (10-1-2. Case where subscription is made in 5QI units)

The UE 10 stores a plurality of pieces of 5QI information subscripted to the UE itself. For example, the UE 10 has a subscription for the 5QI (1), the 5QI (2), the 5QI (3), the 5QI (4), the 5QI (65), the 5QI (66), the 5QI (67), the 5QI (72), the 5QI (76), the 5QI (the 5), the 5QI (6), the 5QI (7), the 5QI (8), and the 5QI (9).

Furthermore, the QFI_1 is allocated to the S-NSSAI_1 corresponding to the call service. The QFI_8 is allocated to the S-NSSAI_2 corresponding to the general data service. The QFI_3 is allocated to the S-NSSAI_3 corresponding to the real-time gaming. QFI_65 is allocated to the S-NSSAI_4 corresponding to the mission critical user plane. The QFI_7 is allocated to the S-NSSAI_5 corresponding to the live streaming.

The QoS profile set in the QFI_1 includes the 5QI (1). The QoS profile set in the QFI_8 includes the 5QI (8). The QoS profile set in the QFI_3 includes the 5QI (3). The QoS profile set in the QFI_65 includes the 5QI (65). The QoS profile set in the QFI_7 includes the 5QI (7) .

The UE 10 performs a procedure of a UE-activated network slice setup request shown in Fig. 9, to request setup of a network slice supporting a plurality of QoS flows. Specifically, first, the UE 10 transmits a NAS message including a network slice setup request to the AMF 301 through the RAN/AN 20 (S901).

The UE 10 can select two or more 5QIs from the plurality of 5QIs stored therein and include the selected 5QIs in the network slice setup request as information necessary for setup of the network slice. For example, in the case of trying to use the XR service, the UE 10 selects the 5QI (3) corresponding to the real-time gaming, the 5QI (65) corresponding to the mission critical user plane, and the 5QI (7) corresponding to the live streaming, and includes them in the network slice setup request.

The AMF 301 forwards the network slice setup request received from the UE 10 to the PCF 305 (S902). The PCF 305 acquires the subscription information in units of 5QIs of the UE 10 from the UDM 307, and confirms that the UE 10 has a subscription using the 5QI (3), the 5QI (65), and the 5QI (7).

In response to the network slice setup request, the PCF 305 generates a network slice (S-NSSAI_XR) to which the QFI_3, the QFI_65, and the QFI_7 corresponding to the 5QI (3), the 5QI (65), and the 5QI (7) are allocated (S903).

Here, the S-NSSAI_X in Chapter 9-2 described above has been set in advance by the communication carrier and stored in the PCF 305. In contrast, it should be noted that the S-NSSAI_XR in chapter 10-1-2 of this document is dynamically set by the PCF 305 prior to the PDU session establishment procedure in response to a request from the UE 10.

The PCF 305 returns a network slice setup response including the generated network slice (S-NSSAI_XR) to the AMF 301 (S904). In addition, the PCF 305 may request the UDM 307 to hold information related to this network slice (S-NSSAI_XR) generated for the UE 10 in the UDR.

Upon receiving the network slice setup response, the AMF 301 determines parameter update of the UE 10 (S905). The AMF 301 transmits the updated configured NSSAI including the network slice (S-NSSAI_XR) to the UE 10 through the DL NAS TRANPORT message (S906).

Upon receiving the updated configured NSSAI, the UE 10 updates its own configured NSSAI. In a case where the AMF 301 requests the UE 10 to re-register, the UE 10 executes the registration procedure of Fig. 4 again on the basis of the updated configured NSSAI (S907).

Alternatively, the AMF 301 may notify the UE 10 of the update of the allowed NSSAI in Step S906 without requesting the UE 10 to re-register. Specifically, the AMF 301 may add the S-NSSAI_XR to the allowed NSSAI of the UE 10, and send the updated allowed NSSAI to the UE 10 through the DL NAS TRANSPORT message.

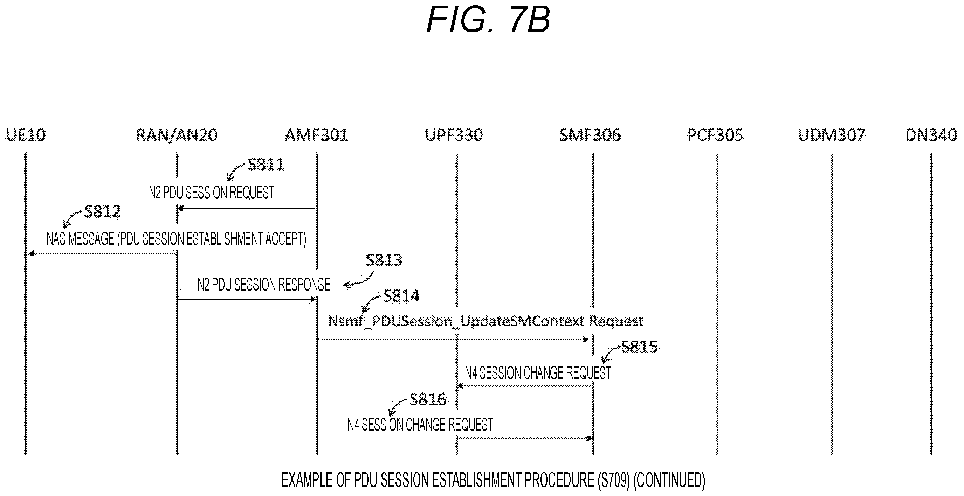

Following the above procedure, the UE 10 can process a plurality of QoS flows (that is, the QoS flow corresponding to the QFI_3, the QoS flow corresponding to the QFI_65, and the QoS flow corresponding to the QFI_7) by executing the PDU session establishment procedure of Fig. 7 and establishing one PDU session corresponding to the S-NSSAI_XR included in the allowed NSSAI.

For example, in the XR service illustrated in Fig. 2, the UE 10 allocates the QFI_65 to the first QoS flow related to relatively small capacity data such as pose information and inertial information, allocates the QFI_3 to the second QoS flow related to data in the high-resolution format of the XR media, and allocates the QFI_7 to the third QoS flow related to data in the low-resolution format of the XR media.

Alternatively, the UE allocates the QFI_65 to the first QoS flow related to relatively small capacity data such as pose information and inertial information, allocates the QFI_3 to the second QoS flow related to data in a format applied to an area close to the center of the display area of the XR medium, and allocates the QFI_7 to the third QoS flow related to data in a format applied to an area away from the center of the display area of the XR medium.

As described above, the UE 10 according to chapter 10-1-2 of this document transmits the network slice setup request that maps a plurality of QoS flows to one network slice associated with one PDU session (S901). As a result, the UE 10 receives the DL NAS TRANSPORT message including the S-NSSAI_XR allocated to one network slice to which the plurality of QoS flows is mapped (S906). Thereafter, the UE 10 establishes one PDU session associated with one network slice to which a plurality of QoS flows is mapped (S709). In this way, a mechanism (framework) for dynamically setting a network slice supporting a plurality of QoS flows by UE activation is provided.

The UE 10 allocates the 5QIs as identification information for each of the plurality of QoS flows, and maps data transmitted and received on one PDU session to any one of the plurality of QoS flows on the basis of the identification information. In this way, the UE 10 may utilize network slices that support a plurality of QoS flows.

Note that, as a first modification, the UE 10 may select a plurality of pieces of 5QI that can be used by the UE itself on the basis of the subscription information, and include the plurality of selected pieces of 5QI, their relative priorities, and the number of QoS flows to be processed as information necessary for the network slice setup in the network slice setup request transmitted in Step S901.

Upon receiving the network slice setup request from the UE 10, the AMF 301 selects the 5QI of a number equal to the number of QoS flows to be processed on the basis of the plurality of available 5QI, the relative priorities of the plurality of S-NSSAI, and the number of QoS flows to be processed included in the message and in consideration of a load status of the current traffic and the like. Here, the traffic load status can be determined from, for example, the status of GFBR of each GBR QoS flow acquired from the RAN/AN 20 or the AMBR for the non-GBR QoS flow. Further, as the AMBR, the UE-AMBR for each UE may be acquired from the RAN/AN 20, or the Session-AMBR for each PDU session may be acquired from the UPF 330.

Then, the AMF 301 transmits a network slice setup request including the plurality of selected 5QIs to the PCF 305 (S902).

According to such a procedure, in a case where there is the 5QI that cannot be supported due to a current traffic load situation or the like, the AMF 301 can select a necessary number of 5QI by filtering the 5QI and selecting other available 5QI instead.

Furthermore, as a second modification, in the network slice setup request transmitted in Step S901, the UE 10 may select at least one available 5QI on the basis of the subscription information for each QoS flow processed by the application, set the relative priority of each of the selected 5QI, generate a list including the 5QI with the relative priority, and include the list as information necessary for setting the network slice.

Furthermore, as a third modification, in a case where the UE 10 owns the information regarding the mapping between the 5QI and the QFI, the UE 10 may include the QFI in the network slice setup request as the information necessary for setup of the network slice instead of the 5QI in Step S901.

### (10-2. Network slice setup request within PDU session establishment procedure)

In Chapter 10-1 described above, an example has been described in which the UE 10 that has completed the registration procedure requests setup of the network slice before executing the PDU session establishment request. On the other hand, in this chapter 10-2, an example of requesting the setting of the network slice in the processing of the PDU session establishment request is described.

In the XR service of Fig. 2, the UE 10 operating as the XR device 50 performs configuration for handling, in one application, a first QoS flow related to relatively small capacity data such as pose information and inertial information transmitted from the XR device 50 to the XR server 60, a second QoS flow related to data in a high-resolution format of XR media received by the XR device 50 from the XR server 60, and a third QoS flow related to data in a low-resolution format of XR media received by the XR device 50 from the XR server 60.

### (10-2-1. Case where subscription is made on per-service basis)

The UE 10 can grasp the service subscribed to the UE itself through the Default Configured NSSAI set in the UE itself. The Default Configured NSSAI includes the S-NSSAI corresponding to one or more services for which the Default Configured NSSAI is subscribed.

For example, the UE 10 subscribes to the real-time gaming (S-NSSAI_3), the mission critical user plane (S-NSSAI_4), and the live streaming (S-NSSAI_5), in addition to the call service (S-NSSAI_1) and the general data service (S-NSSAI_2).

The QFI_1 is allocated to the S-NSSAI_1 corresponding to the call service. The QFI_8 is allocated to the S-NSSAI_2 corresponding to the general data service. The QFI_3 is allocated to the S-NSSAI_3 corresponding to the real-time gaming. The QFI_65 is allocated to the S-NSSAI_4 corresponding to the mission critical user plane. The QFI_7 is allocated to the S-NSSAI _5 corresponding to the live streaming.

The QoS profile set in the QFI_1 includes the 5QI (1). The QoS profile set in the QFI_8 includes the 5QI (8). The QoS profile set in the QFI_3 includes the 5QI (3). The QoS profile set in the QFI_65 includes the 5QI (65). The QoS profile set in the QFI_7 includes the 5QI (7) .

It is assumed that the UE 10 has completed the registration procedure of Fig. 4 and has already acquired the allowed NSSAI. The allowed NSSAI includes the S-NSSAI_1 corresponding to a call service, the S-NSSAI_2 corresponding to a general data service, the S-NSSAI_3 corresponding to real-time gaming, the S-NSSAI_4 corresponding to a mission critical user plane, and the S-NSSAI_5 corresponding to live streaming.

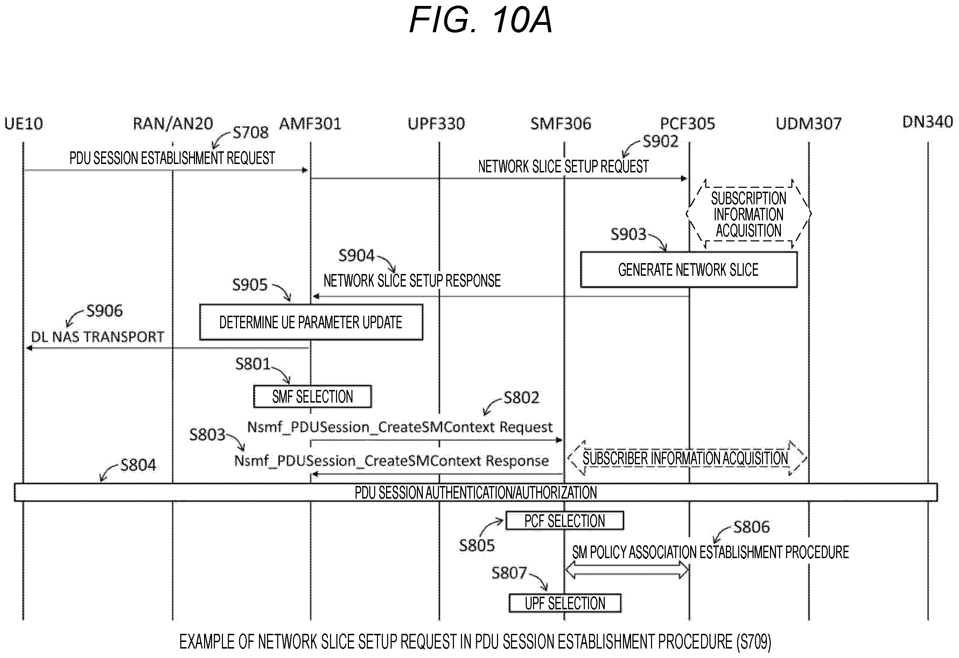

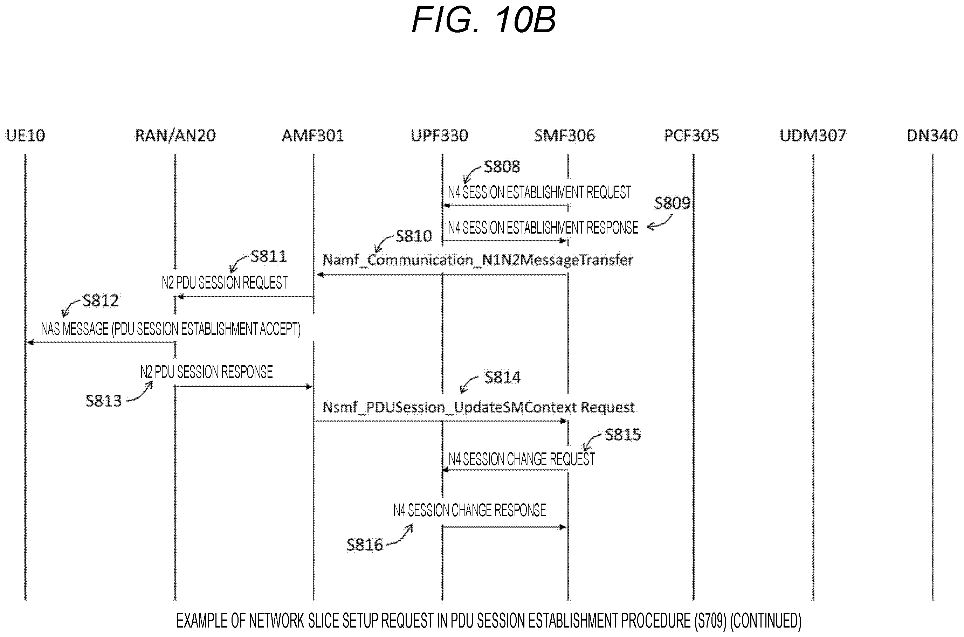

Figs. 10A to 10B are diagrams illustrating an example of a network slice setup request in the PDU session establishment procedure (S709). In order to use the XR service, the UE 10 transmits the NAS message including the PDU session establishment request (PDU Session Establishment Request) to the AMF 301 through the RAN/AN 20 (S708).

In the PDU session establishment request, the S-NSSAI_3 corresponding to the real-time gaming, the S-NSSAI_4 corresponding to the mission critical user plane, the S-NSSAI_5 corresponding to the live streaming, and an indicator instructing to set one S-NSSAI to which a plurality of QFIs corresponding to the S-NSSAI are allocated are included as information necessary for setting a network slice.

Upon receiving the PDU session establishment request from the UE 10, the AMF 301 checks the indicator indicating that one S-NSSAI to which the S-NSSAI_3, the S-NSSAI_4, and the S-NSSAI_5 and a plurality of QFIs corresponding to those S-NSSAIs, which are included in the message, are allocated is set. Then, the AMF 301 transmits a network slice setup request including the S-NSSAI_3, the S-NSSAI_4, and the S-NSSAI_5 as information necessary for setting the network slice to the PCF 305 (S902).

The PCF 305 acquires the subscription information of the service unit (that is, the S-NSSAI unit) of the UE 10 from the UDM 307, and confirms that the UE 10 has a subscription using the real-time gaming (S-NSSAI_3), the mission critical user plane (S-NSSAI_4), and the live streaming (S-NSSAI_5).

In response to the network slice setup request, the PCF 305 generates a network slice (S-NSSAI_XR) to which the QFI_3, the QFI_65, and the QFI_7 corresponding to the S-NSSAI_3, the S-NSSAI_4, and the S-NSSAI_5 are allocated (S903).

Here, the S-NSSAI_X in Chapter 9-1 described above has been set in advance by the communication carrier and stored in the PCF 305. In contrast, it should be noted that the S-NSSAI_XR in chapter 10-2-1 of this document is dynamically configured by the PCF 305 in the course of the PDU session establishment procedure in response to a request from the UE 10.

The PCF 305 returns a network slice setup response including the generated network slice (S-NSSAI_XR) to the AMF 301 (S904). In addition, the PCF 305 may request the UDM 307 to hold information related to this network slice (S-NSSAI_XR) generated for the UE 10 in the UDR.

Upon receiving the network slice setup response, the AMF 301 determines parameter update of the UE 10 (S905). The AMF 301 transmits the updated Allowed NSSAI including the network slice (S-NSSAI_XR) to the UE 10 through the DL NAS TRANSPORT message (S906).

Alternatively, the AMF 301 may transmit the updated Allowed NSSAI to the UE 10 using the N2 PDU session request message in Step S811 and the NAS message (PDU Session Establishment Accept) in Step S812 instead of the DL NAS TRANSPORT message.

The AMF 301 performs the SMF selection (SMF Selection) to select the SMF 306 that provides the network slice (S-NSSAI_XR) included in the updated allowed NSSAI (S801).

Hereinafter, one PDU session that processes a plurality of QoS flows (that is, the QoS flow corresponding to the QFI_3, the QoS flow corresponding to the QFI_65, and the QoS flow corresponding to the QFI_7) mapped to the network slice (S-NSSAI_XR) can be established by performing a procedure after Step S802.

For example, in the XR service illustrated in Fig. 2, the UE 10 allocates the QFI_65 to the first QoS flow related to relatively small capacity data such as pose information and inertial information, allocates the QFI_3 to the second QoS flow related to data in the high-resolution format of the XR media, and allocates the QFI_7 to the third QoS flow related to data in the low-resolution format of the XR media.

Alternatively, the UE 10 allocates the QFI_65 to the first QoS flow related to relatively small capacity data such as pose information and inertial information, allocates the QFI_3 to the second QoS flow related to data in a format applied to an area close to the center of the display area of the XR medium, and allocates the QFI_7 to the third QoS flow related to data in a format applied to an area away from the center of the display area of the XR medium.

As described above, the UE 10 according to the chapter 10-2-1 transmits the PDU session establishment request including a request for mapping a plurality of QoS flows to one network slice associated with one PDU session (S708). As a result, the UE 10 receives the DL NAS TRANSPORT message including the S-NSSAI_XR allocated to one network slice to which the plurality of QoS flows is mapped (S906). Thereafter, the UE 10 establishes one PDU session associated with one network slice to which a plurality of QoS flows is mapped (S709). In this way, a mechanism (framework) for dynamically setting a network slice supporting a plurality of QoS flows in the process of PDU session establishment procedure is provided.

The UE 10 allocates S-NSSAI as identification information for each of the plurality of QoS flows, and maps data transmitted and received on one PDU session to any one of the plurality of QoS flows on the basis of the identification information. In this way, the UE 10 may utilize network slices that support a plurality of QoS flows.

Note that, as a first modification, the UE 10 may select a plurality of pieces of S-NSSAI that can be used by the UE itself on the basis of the subscription information, and include the plurality of selected pieces of S-NSSAI, their relative priorities, and the number of QoS flows to be processed as information necessary for network slice setup in the PDU session establishment request transmitted in Step S708.

For example, the UE 10 selects the S-NSSAI_1, the S-NSSAI_2, the S-NSSAI_3, the S-NSSAI_4, and the S-NSSAI_5 as a plurality of pieces of S-NSSAI that can be used by the UE itself. In addition, the UE 10 sets the relative priorities of the S-NSSSI_3, the S-NSSAI_4, the S-NSSAI_5, the S-NSSAI_2, and the S-NSSAI_1 in this order. In addition, the UE 10 sets 3 (that is, three of the first QoS flow, the second QoS flow, and the third QoS flow are:) as the number of QoS flows to be processed.

Upon receiving the PDU session establishment request from the UE 10, the AMF 301 selects the S-NSSAI of a number equal to the number of QoS flows to be processed on the basis of the plurality of available S-NSSAI, the relative priorities of the plurality of S-NSSAI, and the number of QoS flows to be processed included as information necessary for setup of the network slice in the message and in consideration of a load status of the current traffic and the like. Here, the traffic load status can be determined from, for example, the status of GFBR of each GBR QoS flow acquired from the RAN/AN 20 or the AMBR for the non-GBR QoS flow. Further, as the AMBR, the UE-AMBR for each UE may be acquired from the RAN/AN 20, or the Session-AMBR for each PDU session may be acquired from the UPF 330.

For example, the AMF 301 selects the S-NSSAI_2 instead of the S-NSSAI_3 and the S-NSSAI_4 and the S-NSSAI_5 in a case where the S-NSSAI_5 cannot be supported due to a current traffic load situation or the like. Then, the AMF 301 transmits a network slice setup request including the three S-NSSAIs selected as the information necessary for setting the network slice to the PCF 305 (S902).

According to such a procedure, in a case where there is the S-NSSAI that cannot be supported due to a current traffic load situation or the like, the AMF 301 can select a necessary number of S-NSSAI by filtering the S-NSSAI and selecting other available S-NSSAI instead.

Furthermore, as a second modification, in the PDU session establishment request transmitted in Step S708, the UE 10 may select at least one available S-NSSSAI on the basis of the subscription information for each QoS flow processed by the application, set the relative priority of each of the selected S-NSSAI, generate a list including the S-NSSAI with the relative priority, and include the list as information necessary for setting the network slice.

For example, the UE 10 generates a list in which priority is allocated to the first QoS flow in the order of the S-NSSAI_4, the S-NSSAI_2, and the S-NSSAI_1. In addition, the UE 10 generates a list in which priority is allocated to the second QoS flow in the order of the S-NSSAI_3, the S-NSSAI_2, and the S-NSSAI_1. In addition, the UE 10 generates a list in which priority is allocated to the third QoS flow in the order of the S-NSSAI_5, the S-NSSAI_2, and the S-NSSAI_1.

### (10-2-2. Case where subscription is made in 5QI units)

The UE 10 stores a plurality of pieces of 5QI information subscripted to the UE itself. For example, the UE 10 has a subscription for the 5QI (1), the 5QI (2), the 5QI (3), the 5QI (4), the 5QI (65), the 5QI (66), the 5QI (67), the 5QI (72), the 5QI (76), the 5QI (the 5), the 5QI (6), the 5QI (7), the 5QI (8), and the 5QI (9).

Furthermore, the QFI_1 is allocated to the S-NSSAI_1 corresponding to the call service. The QFI_8 is allocated to the S-NSSAI_2 corresponding to the general data service. The QFI_3 is allocated to the S-NSSAI_3 corresponding to the real-time gaming. QFI_65 is allocated to the S-NSSAI_4 corresponding to the mission critical user plane. The QFI_7 is allocated to the S-NSSAI_5 corresponding to the live streaming.

The QoS profile set in the QFI_1 includes the 5QI (1). The QoS profile set in the QFI_8 includes the 5QI (8). The QoS profile set in the QFI_3 includes the 5QI (3). The QoS profile set in the QFI_65 includes the 5QI (65). The QoS profile set in the QFI_7 includes the 5QI (7) .

It is assumed that the UE 10 has completed the registration procedure of Fig. 4 and has already acquired the allowed NSSAI. The allowed NSSAI includes the S-NSSAI_1 corresponding to a call service, the S-NSSAI_2 corresponding to a general data service, the S-NSSAI_3 corresponding to real-time gaming, the S-NSSAI_4 corresponding to a mission critical user plane, and the S-NSSAI _5 corresponding to live streaming.

The UE 10 performs a network slice setup request in a PDU session establishment procedure (S709) shown in Fig. 10A, to establish one PDU session for a network slice supporting a plurality of QoS flows. The UE 10 transmits the NAS message including the PDU session establishment request to the AMF 301 through the RAN/AN 20 in order to use the XR service (S708).

The UE 10 can select two or more 5QIs from the plurality of 5QIs stored therein and include the selected 5QIs in the PDU session establishment request as information necessary for network slice setup. For example, in the case of trying to use the XR service, the UE 10 includes, in the PDU session establishment request, an indicator instructing to set the 5QI (3) corresponding to the real-time gaming, the 5QI (65) corresponding to the mission critical user plane, and the 5QI (7) corresponding to the live streaming, and one S-NSSAI to which a plurality of QFIs corresponding to these 5QIs are allocated, as information necessary for setting the network slice.

Upon receiving the PDU session establishment request from the UE 10, the AMF 301 checks the 5QI (3), the 5QI (65), and the 5QI (7) included in the message, and the indicator indicating that one S-NSSAI to which a plurality of QFIs corresponding to these 5QIs is allocated is set. Then, the AMF 301 transmits, to the PCF 305, the network slice setup request to which the QFI_3, the QFI_65, and the QFI_7 corresponding to the 5QI (3), the 5QI (65), and the 5QI (7) are allocated as information necessary for setting the network slice (S902).

The PCF 305 acquires the subscription information in units of 5QIs of the UE 10 from the UDM 307, and confirms that the UE 10 has a subscription using the 5QI (3), the 5QI (65), and the 5QI (7).

In response to the network slice setup request, the PCF 305 generates a network slice (S-NSSAI_XR) to which the QFI_3, the QFI_65, and the QFI_7 corresponding to the 5QI (3), the 5QI (65), and the 5QI (7) are allocated (S903).

Here, the S-NSSAI_X in Chapter 9-2 described above has been set in advance by the communication carrier and stored in the PCF 305. In contrast, it should be noted that the S-NSSAI_XR in chapter 10-2-2 of this document is dynamically configured by the PCF 305 in the course of the PDU session establishment procedure in response to a request from the UE 10.

The PCF 305 returns a network slice setup response including the generated network slice (S-NSSAI_XR) to the AMF 301 (S904). In addition, the PCF 305 may request the UDM 307 to hold information related to this network slice (S-NSSAI_XR) generated for the UE 10 in the UDR.

Upon receiving the network slice setup response, the AMF 301 determines parameter update of the UE 10 (S906). The AMF 301 transmits the updated Allowed NSSAI including the network slice (S-NSSAI_XR) to the UE 10 through the DL NAS TRANSPORT message (S906).

Alternatively, the AMF 301 may transmit the updated allowed NSSAI to the UE 10 using the N2 PDU session request message in Step S811 and the NAS message in Step S812 instead of the DL NAS TRANSPORT message.

The AMF 301 performs the SMF selection to select the SMF 306 that provides the network slice (S-NSSAI_XR) included in the updated allowed NSSAI (S801).

Hereinafter, one PDU session that processes a plurality of QoS flows (that is, the QoS flow corresponding to the QFI_3, the QoS flow corresponding to the QFI_65, and the QoS flow corresponding to the QFI_7) mapped to the network slice (S-NSSAI_XR) can be established by performing a procedure after Step S802.

For example, in the XR service illustrated in Fig. 2, the UE 10 allocates the QFI_65 to the first QoS flow related to relatively small capacity data such as pose information and inertial information, allocates the QFI_3 to the second QoS flow related to data in the high-resolution format of the XR media, and allocates the QFI_7 to the third QoS flow related to data in the low-resolution format of the XR media.

Alternatively, the UE 10 allocates the QFI_65 to the first QoS flow related to relatively small capacity data such as pose information and inertial information, allocates the QFI_3 to the second QoS flow related to data in a format applied to an area close to the center of the display area of the XR medium, and allocates the QFI_7 to the third QoS flow related to data in a format applied to an area away from the center of the display area of the XR medium.

As described above, the UE 10 according to the chapter 10-2-2 transmits the PDU session establishment request including a request for mapping a plurality of QoS flows to one network slice associated with one PDU session (S708). As a result, the UE 10 receives the DL NAS TRANSPORT message including the S-NSSAI_XR allocated to one network slice to which the plurality of QoS flows is mapped (S906). Thereafter, the UE 10 establishes one PDU session associated with one network slice to which a plurality of QoS flows is mapped (S709). In this way, a mechanism (framework) for dynamically setting a network slice supporting a plurality of QoS flows in the process of PDU session establishment procedure is provided.

The UE 10 allocates the 5QIs as identification information for each of the plurality of QoS flows, and maps data transmitted and received on one PDU session to any one of the plurality of QoS flows on the basis of the identification information. In this way, the UE 10 may utilize network slices that support a plurality of QoS flows.

Note that, as a first modification, the UE 10 may select a plurality of pieces of 5QI that can be used by the UE itself on the basis of the subscription information, and include the plurality of selected pieces of 5QI, their relative priorities, and the number of QoS flows to be processed as information necessary for the network slice setup in the PDU session establishment request transmitted in Step S708.

Upon receiving the PDU session establishment request from the UE 10, the AMF 301 selects the 5QI of a number equal to the number of QoS flows to be processed on the basis of the plurality of available 5QI, the relative priorities of the plurality of 5QI, and the number of QoS flows to be processed included as information necessary for setup of the network slice in the message and in consideration of a load status of the current traffic and the like. Here, the traffic load status can be determined from, for example, the status of GFBR of each GBR QoS flow acquired from the RAN/AN 20 or the AMBR for the non-GBR QoS flow. Further, as the AMBR, the UE-AMBR for each UE may be acquired from the RAN/AN 20, or the Session-AMBR for each PDU session may be acquired from the UPF 330.

Then, the AMF 301 transmits a network slice setup request including the plurality of selected 5QIs to the PCF 305 (S902).

According to such a procedure, in a case where there is the 5QI that cannot be supported due to a current traffic load situation or the like, the AMF 301 can select a necessary number of 5QI by filtering the 5QI and selecting other available 5QI instead.

Furthermore, as a second modification, in the PDU session establishment request transmitted in Step S708, the UE 10 may select at least one available 5QI on the basis of the subscription information for each QoS flow processed by the application, set the relative priority of each of the selected 5QI, generate a list including the 5QI with the relative priority, and include the list as information necessary for setting the network slice.

Furthermore, as a third modification, in a case where the UE 10 owns the information regarding the mapping between the 5QI and the QFI, the UE 10 may include the QFI in the PDU session establishment request as the information necessary for setup of the network slice instead of the 5QI in Step S708.

### (10-2-3. Network slice setup request according to DNN)

In Chapters 10-2-1 and 10-2-2 described above, an example in which the setup of the network slice is requested according to the indicator included in the PDU session establishment request transmitted from the UE 10 to the AMF 301 has been described. At that time, the indicator instructs to set one S-NSSAI (for example, S-NSSAI_XR) to which a plurality of QFIs corresponding to a plurality of S-NSSAI or 5QIs are allocated.

On the other hand, in this chapter 10-2-3, an example in which the setup of the network slice is requested according to the DNN included in the PDU session establishment request transmitted from the UE 10 to the AMF 301 is described.

The PCF 305 holds information necessary for network slice setup in advance for each DNN. The information necessary for setting the network slice is, for example, a set of candidates of a plurality of S-NSSAIs or 5QIs corresponding to a plurality of QFIs allocated to one S-NSSAI (for example, S-NSSAI_XR). Information necessary for setting the network slice is prepared for each application, for example, such as XR service and cloud gaming. Each application is identified by an application identifier (Application Identifier). Further, a set of candidates of a plurality of S-NSSAIs or 5QIs may include relative priorities of the candidates.

In addition, the information necessary for the setup of the network slice may be information including the number or type of QoS flows for each uplink and downlink to which different QoS controls are applied, a plurality of sets of candidates for 5QI mapped to each QoS flow, and relative priorities of the plurality of candidates in each set. Information necessary for setting the network slice may be included in a packet flow description (PFD) for each application ID. The PCF 305 can acquire the PFD for each application ID from the SMF 306 or the UDR.

The AMF 301 may execute the network slice setup request according to the DNN in the case where the PDU session establishment request received from the UE 10 does not include any S-NSSAI or 5QI and the indicator.

Through the NEF 302, the AF 308 may provide the UDM 307 with information necessary for setting the network slice according to the DNN as a part of an information element (IE) of an application function request (AF request) and cause the UDM to store the information. The AF 308 operates as a function of a control plane of the DN 340. The PCF 305 can acquire information necessary for network slice setup according to the DNN from the UDR.

The AF 308 acquires, through the NEF 302, the information of the 5QI supported by the PLMN, and generates the information necessary for the setup of the above network slice. The AF 308 may create the QoS profiles to be requested for each 5QI and include the QoS profiles as Requested QoS profiles in information necessary for network slice setup.

The PCF 305 may inquire of the AF 308 to acquire information necessary for setting the network slice according to the DNN. Alternatively, the PCF 305 may inquire of the NEF 302 and acquire information necessary for setting the network slice according to the DNN from the AF 308 through the NEF 302.

In Step S903 of Fig. 10A, the PCF 305 generates one piece of S-NSSAI to which a plurality of QFIs is allocated on the basis of the subscription information related to the network slice of the UE 10, a set of candidates of a plurality of S-NSSAI or 5QIs corresponding to a plurality of QFIs allocated to one piece of S-NSSAI, and relative priorities of the candidates. For example, the PCF 305 generates a network slice (S-NSSAI_XR) to which the QFI_3, the QFI_65, and the QFI_7 corresponding to the 5QI (3), the 5QI (65), and the 5QI (7) are allocated.

Alternatively, the information required to configure the network slice acquired from the AF 308 may include information instructing selection from among a plurality of sets of S-NSSAI or 5QI candidates in accordance with the SLA between a third party serving through the DNN and the PLMN, independent of subscription information regarding the network slice of the UE 10. The PCF 305 generates, for example, the network slice (S-NSSAI_XR) to which the QFI_3, the QFI_65, and the QFI_7 corresponding to the 5QI (3), the 5QI (65), and the 5QI (7) are allocated on the basis of a plurality of sets of candidates of the S-NSSAI or the 5QI and relative priorities of the candidates.

### (10-2-4. Network slice setup request by Addition of QFI)

The network slice setup request in Step S902 of Fig. 10A may be a request for adding one or more QFIs for one PDU session associated with one S-NSSAI to which one QFI is allocated. For example, when one PDU session establishment request corresponding to the S-NSSAI_3 (real-time gaming) to which the QFI_3 is allocated is received from the UE 10 in Step S708, the AMF 301 requests addition of the QFI_65 corresponding to the 5QI (65) and the QFI_7 corresponding to the 5QI (7) for the PDU session.

It should be noted that the request to add one or more QFIs for one PDU session may be made in an SM policy association establishment procedure (SM Policy Association Establishment Procedure) in Step S806. The SMF 306 requests the PCF 305 to add the QFI_65 corresponding to the 5QI (65) and the QFI_7 corresponding to the 5QI (7) in one PDU session establishment procedure corresponding to the S-NSSAI_3 (real-time gaming) to which the QFI_3 is allocated.

Alternatively, the PCF 305 may determine to add the QFI_65 and the QFI_7 to the PDU session by using the information necessary for setting the network slice according to the DNN described above according to the DNN associated with one PDU session. Upon determining addition of the QFI_65 and the QFI_7 to one PDU session, the PCF 305 provides the SMF 306 with the QoS profile in which the 5QI (65) corresponding to the QFI_65 is set and the QoS profile in which the 5QI (7) corresponding to the QFI_7 is set, in addition to the QoS profile in which the 5QI (3) corresponding to the QFI_3 is set.

### (10-3. Network slice setup change after PDU session establishment)

In Chapters 10-1 and 10-2 described above, an example of establishing one PDU session associated with one network slice to which a plurality of QoS flows is mapped has been described. However, traffic conditions change from moment to moment. Therefore, in a state in which one PDU session corresponding to one network slice (S-NSSAI_XR) to which a plurality of QoS flows is mapped is established, a situation may occur in which a certain QoS flow cannot satisfy the GFBR.

At that time, as described above, the RAN/AN 20 needs to transmit a notification indicating that the QoS flow cannot satisfy the GFBR to the SMF 306. However, it is not preferable to stop using the entire network slice (S-NSSAI_XR) only when one QoS flow cannot satisfy the GFBR.

In this chapter 10-3, a processing method in a case where one QoS flow cannot be used in a state in which one PDU session associated with one network slice to which a plurality of QoS flows is mapped is established will be described.

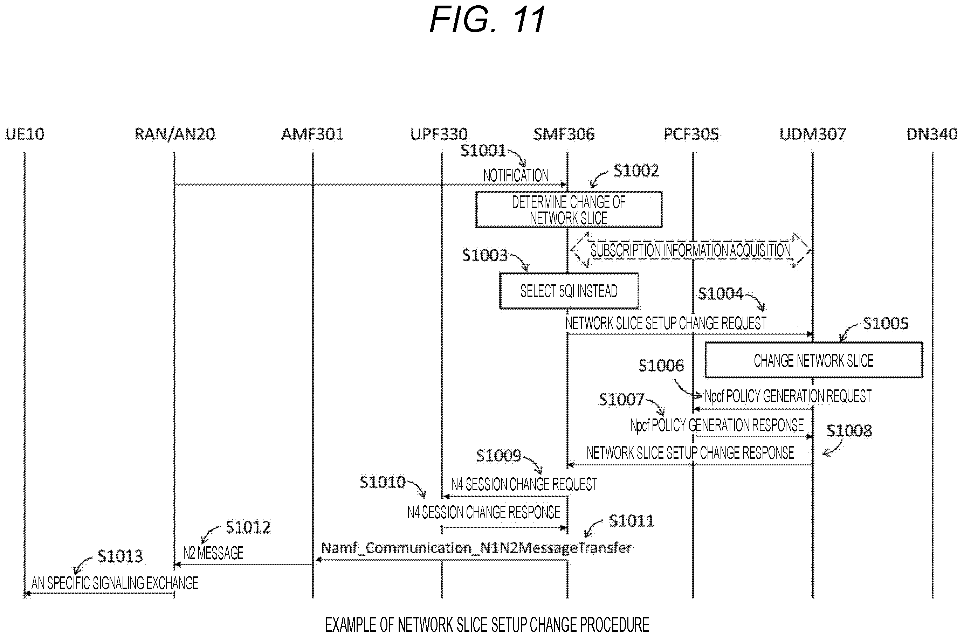

Fig. 11 is a diagram illustrating an example of a network slice setup change after PDU session establishment. For example, upon determining that the QoS flow corresponding to the 5QI (3) cannot satisfy the GFBR, the RAN/AN 20 transmits, to the SMF 306, a notification indicative of that fact (S1001). The notification includes a request for mapping another QoS flow instead of the QoS flow that cannot be used.

The SMF 306 that has received this notification determines a configuration change of the network slice (S-NSSAI_XR) (S1002).

The SMF 306 acquires the subscription information in units of 5QIs of the UE 10 from the UDM 307, and selects a candidate of the 5QI instead of the 5QI (3) from the subscription information (S1003). For example, the SMF 306 selects the 5QI (67) corresponding to the mission critical video as a candidate for the 5QI instead of the 5QI (3). The SMF 306 transmits a network slice setup modification request (Network Slice Setup Modification Request) message including the 5QI (67), the 5QI (65), and the 5QI (7) to the UDM 307 (S1004).

The UDM 307 confirms that the UE 10 has a subscription using the 5QI (67), the 5QI (65), and the 5QI (7) on the basis of the subscription information of the 5QI unit of the UE 10, and changes a plurality of QFIs allocated to the network slice (S-NSSAI_XR) to a QFI_67 corresponding to the 5QI (67), a QFI_65 corresponding to the 5QI (65), and a QFI_7 corresponding to the 5QI (7) (S1005).

The UDM 307 sends, to the PCF 305, an Npcf Policy Generation Request (Npcf Policy Create) message requesting configuration of policy rules for the network slices (S-NSSAI_XR) to which the QFI_67, the QFI_65, and the QFI_7 are allocated (S1006).

Upon receiving this, the PCF 305 completes the setting of the policy rule for allocating the QFI_67, the QFI_65, and the QFI_7 to the network slice (S-NSSAI_XR), for example, returns an Npcf policy generation response (Npcf Policy Create Response) to the UDM 307 (S1007).

The UDM 307 returns a network slice setup modification response (Network Slice Modification Response) message to the SMF 306 (S1008). The SMF 306 sends an N4 session modification request (N4 Session Modification Request) to the UPF 330, to update an N4 rule related to the changed QoS flow (S1009). The UPF 330 updates the N4 rule and returns an N4 session modification response (N4 Session Modification Response) to the SMF 306 (S1010).

The SMF 306 sends a Namf_Communication_N1N2 MessageTransfer to the AMF 301 (S1011). The Namf_Communication_N1N2 Message Transfer includes the PDU session ID, the N2 SM information, the CN tunnel information, the S-NSSAI_XR, and the N1 SM container.

The N2 SM information includes the PDU session ID, the plurality of QFIs (that is, the QFI_67, the QFI_65, and the QFI_7), a plurality of QoS profiles (that is, a QoS profile corresponding to the QFI_67, a QoS profile corresponding to the QFI_65, and a QoS profile corresponding to the QFI_7), and the like. The N1 SM container includes a PDU session modification command (PDU Session Modification Command) that must be provided to the UE 10 by the AMF 301.

The AMF 301 transmits an N2 message to the RAN/AN 20 (S1012). The N2 message includes the NAS message including the PDU session ID with the UE 10 as a transmission destination and the PDU session change command, and the N2 SM information received from the SMF 306. In addition, the AMF 301 that has received the S-NSSAI_XR through the Namf_Communication_N1N2 MessageTransfer may update the Allowed NSSAI if necessary, and include the updated Allowed NSSAI in the N2 SM information.

The RAN/AN 20 acquires a plurality of QFIs (That is, QFI_67, QFI_65, and QFI_7) newly allocated by the network slice setup change and a plurality of QoS profiles (That is, a QoS profile corresponding to QFI_67, a QoS profile corresponding to QFI_65, and a QoS profile corresponding to QFI_7.) from the N2 SM information.

The RAN/AN 20 transfers the NAS message including the PDU session ID and the N1 SM container to the UE 10 by an AN specific signaling exchange (AN Specific Signaling Exchange) message (S1013). Alternatively, the RAN/AN 20 uses an RRC connection reconfiguration to instruct the UE 10 to change the wireless parameter required accompanying the network slice setup change.

The UE 10 acquires the updated QoS rule through the RAN/AN 20 when the QoS rule required for processing the uplink QoS flow changes due to the network slice setup change.

As described above, in a case where one QoS flow cannot be supported in a state in which a plurality of QoS flows is mapped to one network slice, the RAN/AN 20 according to chapter 10-3 transmits a request for mapping another QoS flow instead of the one QoS flow to the network slice (S1001). In this way, even in a case where a certain QoS flow cannot be used, the use of the network slice can be continued.

Note that Fig. 11 illustrates an example in which the SMF 306 transmits a network slice setup modification request (Network Slice Setup Modification Request) message to the UDM 307, and the UDM 307 changes a plurality of QFIs allocated to the network slice (S-NSSAI_XR) in S1004. However, the SMF 306 may transmit a network slice setup modification request (Network Slice Setup Modification Request) message to the PCF 305, and the PCF 305 may change a plurality of QFIs allocated to the network slice (S-NSSAI_XR). At that time, the PCF 305 acquires the subscription information in units of 5QIs of the UE 10 from the UDM 307, confirms that the UE 10 has a subscription using the 5QI (67), the 5QI (65), and the 5QI (7) on the basis of the subscription information, and changes a plurality of QFIs to be allocated to the network slice (S-NSSAI_XR).

Note that, as a first modification, in Step S1003, the SMF 306 may acquire a list of a plurality of 5QIs to which relative priorities are allocated from the AMF 301 for each QoS flow, and select a candidate for the 5QI from the list for each QoS flow on the basis of the subscription information in units of 5QIs of the UE 10. For example, the list for each QoS flow is a list acquired from the UE 10 through the network slice setup request or the PDU session establishment request described above. Alternatively, the list for each QoS flow may be possessed in advance by the PCF 305 or acquired from the AF 308 as information necessary for setting the network slice described above.

In addition, as a second modification, determining that the GFBR of 5QI (3) corresponding to the S-NSSAI_3 cannot be satisfied in Step S1001, for example, and then the RAN/AN 20 may transmit a notification indicating the fact to the SMF 306. In Step S1003, the SMF 306 that has received the information may acquire the subscription information of the service unit (that is, the S-NSSAI unit) of the UE 10 from the UDM 307 and select a candidate of the S-NSSAI instead of the S-NSSAI_3 from the subscription information.

In addition, the network slice setup change after the PDU session is established as described in the chapter 10-3 may be required at the time of handover accompanying the movement of the UE 10, for example. Specifically, as the UE 10 moves, the RAN/AN 20 activates handover from a source base station (Source gNB) to a target base station (Target gNB). At that time, a case is assumed in which the target base station cannot support or does not support one (for example, the QoS flow corresponding to the QFI_3) of the plurality of QoS flows mapped to the network slice (S-NSSAI_XR).

In such a case, the notification in Step S1001 is a notification that the target base station cannot support or does not support one (for example, the QoS flow corresponding to the QFI_3) of the plurality of QoS flows. In Step S1003, the SMF 306 that has received this notification selects a candidate for the 5QI instead of the 5QI (3) from the 5QIs supported by the target base station in consideration of the list of the plurality of 5QIs to which the relative priority is given and the subscription information in units of 5QIs of the UE 10.

Note that, in this chapter 10-3, a processing procedure in a case where one QoS flow cannot be supported in one network slice supporting a plurality of QoS flows has been described, but the applicable range of the technology according to the present disclosure is not limited thereto. For example, in a case where one network slice supporting one QoS flow cannot support the QoS flow, or in a case where the target base station does not support the QoS flow at the time of handover, the above-described method can be applied as procedure of setting an alternative QoS flow.

### <11. Conclusion>

The terminal device, the base station device, the processing device, and the processing method for implementing a mechanism (framework) for dynamically setting a network slice supporting a plurality of QoS flows have been described with the XR service as an example. However, the XR service is an example of an application that requires transmission and reception of a plurality of types of data in one service, and an applicable range of the technology according to the present disclosure is not limited to the XR service. The technology according to the present disclosure can be applied to any application that requires transmission and reception of a plurality of types of data in one service.

Note that the processing in the present disclosure is not limited to a specific standard, and the exemplified setting may be appropriately changed. Note that the respective embodiments described above illustrate examples for embodying the present disclosure, and the present disclosure can be implemented in various other modes. For example, various modifications, substitutions, omissions, or combinations thereof can be made without departing from the gist of the present disclosure. Such modifications, substitutions, omissions, and the like are also included in the scope of the present disclosure, and are similarly included in the inventions disclosed in the claims and the equivalents thereof.

Furthermore, the procedures of processing described in the present disclosure may be regarded as a method having a series of these procedures. Alternatively, the procedures may be regarded as a program for causing a computer to execute the series of these procedures or a recording medium storing the program. In addition, the processing described above is executed by a processor such as a CPU of a computer. Furthermore, the type of the recording medium does not affect the embodiment of the present disclosure, and thus is not particularly limited.

Note that each component illustrated in Figs. 2 in the present disclosure may be realized by software or hardware. For example, each component may be a software module realized by software such as a microprogram, and each component may be realized by the processor executing the software module. Alternatively, each component may be realized by a circuit block on a semiconductor chip (die), for example, an integrated circuit such as an application specific integrated circuit (ASIC) or a field programmable gate array (FPGA). In addition, the number of components and the number of pieces of hardware for realizing the components may not coincide with each other. For example, one processor or circuit may realize a plurality of components. Conversely, one component may be realized by a plurality of processors or circuits.

Note that the type of the processor described in the present disclosure is not limited. For example, a CPU, a micro processing unit (MPU), a graphics processing unit (GPU), or the like may be used.

Note that the present disclosure can also have the following configurations.
[1] (Terminal device)
   A terminal device including: a processor; and a transceiver, in which
   the processor, through the transceiver,
   transmits a request for mapping a plurality of QoS flows to one network slice associated with one PDU session,
   receives an S-NSSAI allocated to the one network slice to which the plurality of QoS flows is mapped, and
   establishes the one PDU session associated with the one network slice to which the plurality of QoS flows is mapped.
[2] The terminal device according to [1], in which
   the processor
   allocates identification information for each of the plurality of QoS flows, and
   maps data transmitted and received on the one PDU session to any one of the plurality of QoS flows on the basis of the identification information.
[3] The terminal device according to [1] or [2], in which the processor receives, through the transceiver, a QoS rule applied to data transmitted and received on the one PDU session.
[4] The terminal device according to any one of [1] to [3], in which
   the processor
   allocates identification information for each of the plurality of QoS flows to be processed by an application using data transmitted and received through the transceiver, and
   includes the identification information in the request.
[5] The terminal device according to claim [4], in which the identification information is S-NSSAI, 5QI, or QFI.
[6] The terminal device according to any one of claims [1] to [5], in which
   the processor
   sets the number of QoS flows to be processed by an application using data transmitted and received through the transceiver, and
   includes the number of QoS flows to be processed in the request.
[7] The terminal device according to [6], in which
   the processor
   selects available S-NSSAI equal to or greater than the number of QoS flows to be processed by an application using data transmitted and received through the transceiver, on the basis of subscription information,
   sets a relative priority of each of the selected S-NSSAI, and
   includes the selected S-NSSAI, the relative priority, and the number of QoS flows to be processed in the request.
[8] The terminal device according to [6], in which
   the processor
   selects 5QIs of the number equal to or greater than the number of QoS flows to be processed by an application using data transmitted and received through the transceiver on the basis of subscription information,
   sets a relative priority of each of the selected 5QIs, and
   includes the selected 5QI, the relative priority, and the number of QoS flows to be processed in the request.
[9] The terminal device according to claim [6], in which
   the processor
   selects at least one available S-NSSSAI for each of the QoS flows to be processed by an application using data transmitted and received through the transceiver, on the basis of subscription information, sets a relative priority of each of the selected S-NSSAI, and generates a list including the selected S-NSSAI and the relative priority, and
   includes the list in the request.
[10] The terminal device according to [10], in which
   the processor
   selects at least one available 5QI for each of the QoS flows to be processed by an application using data transmitted and received through the transceiver, on the basis of subscription information, sets a relative priority of each of the selected 5QI, and generates a list including the selected 5QI and the relative priority, and
   includes the list in the request.
[11] The terminal device according to any one of [1] to [10], further including a sensor, in which
   the processor
   maps first data acquired by the sensor to a first QoS flow included in the plurality of QoS flows, and
   transmits the first data on the one PDU session through the transceiver.
[12] The terminal device according to [11], further including a display unit, in which
   the processor
   receives second data mapped to a second QoS flow included in the plurality of QoS flows on the one PDU session through the transceiver, and
   displays the second data on the display unit, and
   the second data is image data adapted to a first display area specified on the basis of the first data.
[13] The terminal device according to [12], in which
   the processor
   specifies a second display area on the basis of the first data acquired by the sensor, and applies a coordinate conversion for transforming image data adapted to the first display area into image data adapted to the second display area.
[14] The terminal device according to [12], in which
   the processor
   receives third data mapped to a third QoS flow included in the plurality of QoS flows on the one PDU session through the transceiver, and
   displays the third data on the display unit,
   the third data is image data adapted to the first display area specified on the basis of the first data, and
   resolution or priority of the second data is different from resolution or priority of the third data.
[15] (Base station device) A base station device including: a processor; and a transceiver, in which
   the processor, through the transceiver,
   establishes one PDU session associated with one network slice to which a plurality of QoS flows is mapped, and
   receives a QoS profile configured for each of the plurality of QoS flows.
[16] The base station device according to [15], in which
   the processor
   in a case where one QoS flow included in the plurality of QoS flows cannot be supported, transmits a request for mapping another QoS flow instead of the one QoS flow to the one network slice, through the transceiver.
[17] The base station device according to [16], in which
   the processor
   acquires a set of S-NSSAI or 5QI available to a terminal device using the one network slice, and
   a QoS flow corresponding to S-NSSAI or 5QI selected from the set is the another QoS flow.
[18] The base station device according to [16], in which
   the processor acquires a first set of S-NSSAI or 5QI available to a terminal device that utilizes the one network slice,
   generates a second set of QoS flows corresponding to S-NSSAI or 5QI included in the first set, and
   transmits a request for selecting another of the QoS flows from the second set.
[19] The base station device according to [18], in which
   the processor
   sets a relative priority of the S-NSSAI or 5QI included in the second set, and
   includes the relative priority in the request.
[20](PCF device) A processing device including a processor, in which
   the processor
   receives a request for mapping a plurality of QoS flows to one network slice associated with one PDU session,
   acquires subscription information of a terminal device to which the one PDU session is to be established, and
   allocates identification information for each of the plurality of QoS flows and maps the plurality of QoS flows to the one network slice in a case where the plurality of QoS flows is available on the basis of the subscription information.
[21] The processing device according to [20], in which the identification information is S-NSSAI, 5QI, or QFI.
[22] The processing device according to [20], in which the processor receives the request from the terminal device.
[23] The processing device according to [20], in which the processor receives the request from AF in response to a DNN.
[24] The processing device according to [20], in which the processor establishes, according to a PDU session establishment request message that includes identification information of the one network slice to which the identification information of the plurality of QoS flows is mapped, the one PDU session associated with the one network slice to which the identification information of the plurality of QoS flows is mapped.
[25] The processing device according to [20], in which the processor establishes the one PDU session associated with the one network slice to which the identification information of the plurality of QoS flows is mapped according to a PDU session establishment request message including the request.
[26] The processing device according to [20], in which
   in a case where it is determined that a resource type of at least one QoS flow of the plurality of QoS flows mapped to the network slice is GBR and GFBR of the QoS flow is not satisfied,
   the processor activates processing of changing the plurality of QoS flows mapped to the network slice.
[27] The processing device according to [20], in which
   in a case where it is determined that a target base station cannot process at least one QoS flow of the plurality of QoS flows mapped to the network slice,
   the processor activates processing of changing the plurality of QoS flows mapped to the network slice to a source base station.
[28] The processing device according to [20], in which the processor receives the request including a list including the identification information of the plurality of QoS flows, a priority for each QoS flow corresponding to the identification information in the list, and information related to the number of QoS flows mapped to the one network slice from candidates of the QoS flow in the list.
[29] The processing device according to [28], in which the processor performs, until reaching the number of QoS flows, a determination as to whether or not the subscription information accepts use of the QoS flow corresponding to the identification information in the list in descending order of priority, among candidates of QoS flows corresponding to the identification information in the list, and
   maps the QoS flow to the one network slice in a case where the determination is to accept the use.
[30] The processing device according to [20], in which the processor receives the request including a list of a number equal to the number of QoS flows mapped to the one network slice, the list including identification information of one or more QoS flow, and information regarding a priority for each QoS flow corresponding to the identification information in the list for each list.
[31] The processing device according to [30], in which the processor executes, for each list, a determination as to whether or not the subscription information accepts use of the QoS flow corresponding to the identification information in the list in descending order of priority, among candidates of QoS flows corresponding to the identification information in the list, and
   specifies one of the QoS flows accepted to be used for each list, and maps the one QoS flow for each specified list to the one network slice.
[32] (SMF device)
   A processing device including a processor, in which
   the processor
   selects an alternative second network slice in response to the notification, and performs PDU session change procedure for associating the second network slice with the one PDU session, in a case of receiving a notification that one network slice associated with one PDU session cannot be supported.
[33] The processing device according to [32], in which
   in a case where the target base station determines that the network slice cannot be processed,
   the processor receives the notification from a source base station.
[34] The processing device according to [32], in which
   in a case where it is determined that a resource type of a QoS flow mapped to the network slice is GBR and GFBR of the QoS flow is not satisfied,
   the processor receives the notification.
[35] The processing device according to [32], in which the processor selects the second network slice from two or more subscribed S-NSSAI.
[36]
   the processor acquires one or more sets of S-NSSAI or 5QIs corresponding to the S-NSSAI that are candidates for the second network slice, and information regarding priority of the one or more S-NSSAI or 5QIs in the set, and
   The processing device according to [35], in which the second network slice is selected from the two or more subscribed S-NSSAIs on the basis of information regarding priority of the one or more S-NSSAIs or 5QIs.
[37] (PCF Method) A processing method including:
   receiving a request for mapping a plurality of QoS flows to one network slice associated with one PDU session;
   acquiring subscription information of a terminal device to which the one PDU session is to be established; and
   allocating identification information for each of the plurality of QoS flows and mapping the plurality of QoS flows to the one network slice in a case where the plurality of QoS flows is available on the basis of the subscription information.
[38] The processing method according to [37], in which the identification information is S-NSSAI, 5QI, or QFI.
[39] The processing method according to [37], in which the request is received from the terminal device.
[40] The processing method according to [37], in which the request is received from the AF according to the DNN.
[41] The processing method according to [37], in which the one PDU session associated with the one network slice to which the identification information of the plurality of QoS flows is mapped is established according to a PDU session establishment request message that includes identification information of the one network slice to which the identification information of the plurality of QoS flows is mapped.
[42] The processing method according to [37], in which the one PDU session associated with the one network slice to which the identification information of the plurality of QoS flows is mapped is established according to a PDU session establishment request message that includes the request.
[43] The processing method according to [37], in which
   in a case where it is determined that a resource type of at least one QoS flow of the plurality of QoS flows mapped to the network slice is GBR and cannot meet GFBR of the QoS flow,
   processing of changing the plurality of QoS flows mapped to the network slice is activated.
[44] The processing method according to [37], in which
   in a case where it is determined that a target base station cannot process at least one QoS flow of the plurality of QoS flows mapped to the network slice,
   processing of changing the plurality of QoS flows mapped to the network slice to a source base station is activated.
[45] The processing method according to [37], in which the request is received the request including a list including the identification information of the plurality of QoS flows, a priority for each QoS flow corresponding to the identification information in the list, and information related to the number of QoS flows mapped to the one network slice from candidates of the QoS flow in the list.
[46] The processing method according to [45], in which a determination is performed as to whether or not the subscription information accepts use of the QoS flow corresponding to the identification information in the list in descending order of priority, among candidates of QoS flows corresponding to the identification information in the list until reaching the number of QoS flows, and
   the QoS flow is mapped to the one network slice in a case where the determination is to accept the use.
[47] The processing method according to [37], in which the request is received which includes a list of a number equal to the number of QoS flows mapped to the one network slice, the list including identification information of one or more QoS flow, and information regarding a priority for each QoS flow corresponding to the identification information in the list for each list.
[48] The processing method according to [47], in which the processor executes, a determination is performed as to whether or not the subscription information accepts use of the QoS flow corresponding to the identification information in the list in descending order of priority, among candidates of QoS flows corresponding to the identification information in the list for list, and
   specifies one of the QoS flows accepted to be used for each list, and maps the one QoS flow for each specified list to the one network slice.
[49] (SMF method) A processing method, in which
   an alternative second network slice is selected in response to the notification, and PDU session change procedure for associating the second network slice with the one PDU session is performed,
   in a case of receiving a notification that one network slice associated with one PDU session cannot be supported.
[50] The processing method according to [49], in which
   in a case where the target base station determines that the network slice cannot be processed,
   the processor receives the notification from a source base station.
[51] The processing method according to [49], in which
   in a case where it is determined that a resource type of a QoS flow mapped to the network slice is GBR and GFBR of the QoS flow is not satisfied,
   the processor receives the notification.
[52] The processing method according to [49], in which the processor selects the second network slice from two or more subscribed S-NSSAI.
[53] The processing method according to [52], in which the processor acquires one or more sets of S-NSSAI or 5QIs corresponding to the S-NSSAI which are candidates for the second network slice, and information regarding priority of the one or more S-NSSAI or 5QIs in the set, and
   selects the second network slice from the two or more subscribed S-NSSAIs on the basis of information regarding priority of the one or more S-NSSAIs or 5QIs.

### REFERENCE SIGNS LIST

- 10: UE (terminal device)
- 20: RAN/AN (base station device)
- 30: 5GC
- 301: AMF
- 302: NEF
- 303: NRF
- 304: NSSF
- 305: PCF (processing device)
- 306: SMF
- 307: UDM
- 308: AF
- 309: AUSF
- 310: UCMF
- 330: UPF
- 340: DN
- 40: Application server
- 50: (XR device)
- 51: 3DOF/6DOF tracking and XR sensor unit
- 52: XR media content distribution unit
- 53: 5GS distribution unit
- 54: XR media decoding unit
- 55: XR display area rendering unit
- 56: Display unit
- 60: XR server
- 61: XR media generation unit
- 62: XR media encoding unit
- 63: XR media content distribution unit
- 64: 5GS distribution unit

## Claims

1. A terminal device comprising: a processor; and a transceiver, wherein
the processor, through the transceiver,
transmits a request for mapping a plurality of QoS flows to one network slice associated with one PDU session,
receives an S-NSSAI allocated to the one network slice to which the plurality of QoS flows is mapped, and
establishes the one PDU session associated with the one network slice to which the plurality of QoS flows is mapped.

2. The terminal device according to claim 1, wherein
the processor
allocates identification information for each of the plurality of QoS flows, and
maps data transmitted and received on the one PDU session to any one of the plurality of QoS flows on a basis of the identification information.

3. The terminal device according to claim 1, wherein the processor receives, through the transceiver, a QoS rule applied to data transmitted and received on the one PDU session.

4. The terminal device according to claim 1, wherein
the processor
allocates identification information for each of the plurality of QoS flows to be processed by an application using data transmitted and received through the transceiver, and
includes the identification information in the request.

5. The terminal device according to claim 4, wherein the identification information is S-NSSAI, 5QI, or QFI.

6. The terminal device according to claim 1, wherein
the processor
sets the number of QoS flows to be processed by an application using data transmitted and received through the transceiver, and
includes the number of QoS flows to be processed in the request.

7. The terminal device according to claim 1, wherein
the processor
selects available S-NSSAI equal to or greater than the number of QoS flows to be processed by an application using data transmitted and received through the transceiver, on a basis of subscription information,
sets a relative priority of each of the selected S-NSSAI, and
includes the selected S-NSSAI, the relative priority, and the number of QoS flows to be processed in the request.

8. The terminal device according to claim 1, wherein
the processor
selects 5QIs of the number equal to or greater than the number of QoS flows to be processed by an application using data transmitted and received through the transceiver on a basis of subscription information,
sets a relative priority of each of the selected 5QIs, and
includes the selected 5QI, the relative priority, and the number of QoS flows to be processed in the request.

9. The terminal device according to claim 1, wherein
the processor
selects at least one available S-NSSSAI for each of the QoS flows to be processed by an application using data transmitted and received through the transceiver, on a basis of subscription information, sets a relative priority of each of the selected S-NSSAI, and generates a list including the selected S-NSSAI and the relative priority, and
includes the list in the request.

10. The terminal device according to claim 1, wherein
the processor
selects at least one available 5QI for each of the QoS flows to be processed by an application using data transmitted and received through the transceiver, on a basis of subscription information, sets a relative priority of each of the selected 5QI, and generates a list including the selected 5QI and the relative priority, and
includes the list in the request.

11. The terminal device according to claim 1, further comprising a sensor, wherein
the processor
maps first data acquired by the sensor to a first QoS flow included in the plurality of QoS flows, and
transmits the first data on the one PDU session through the transceiver.

12. The terminal device according to claim 11, further comprising a display unit, wherein
the processor
receives second data mapped to a second QoS flow included in the plurality of QoS flows on the one PDU session through the transceiver, and
displays the second data on the display unit, and
the second data is image data adapted to a first display area specified on a basis of the first data.

13. The terminal device according to claim 12, wherein
the processor
specifies a second display area on a basis of the first data acquired by the sensor, and applies a coordinate conversion for transforming image data adapted to the first display area into image data adapted to the second display area.

14. The terminal device according to claim 12, wherein
the processor
receives third data mapped to a third QoS flow included in the plurality of QoS flows on the one PDU session through the transceiver, and
displays the third data on the display unit,
the third data is image data adapted to the first display area specified on a basis of the first data, and
resolution or priority of the second data is different from resolution or priority of the third data.

15. A base station device comprising: a processor; and a transceiver, wherein
the processor, through the transceiver,
establishes one PDU session associated with one network slice to which a plurality of QoS flows is mapped, and
receives a QoS profile configured for each of the plurality of QoS flows.

16. The base station device according to claim 15, wherein
the processor
in a case where one QoS flow included in the plurality of QoS flows cannot be supported, transmits a request for mapping another QoS flow instead of the one QoS flow to the one network slice, through the transceiver.

17. The base station device according to claim 16, wherein
the processor
acquires a set of S-NSSAI or 5QI available to a terminal device using the one network slice, and
a QoS flow corresponding to S-NSSAI or 5QI selected from the set is the another QoS flow.

18. A processing device comprising a processor, wherein
the processor
receives a request for mapping a plurality of QoS flows to one network slice associated with one PDU session,
acquires subscription information of a terminal device to which the one PDU session is to be established, and
allocates identification information for each of the plurality of QoS flows and maps the plurality of QoS flows to the one network slice in a case where the plurality of QoS flows is available on a basis of the subscription information.

19. The processing device according to claim 18, wherein the identification information is S-NSSAI, 5QI, or QFI.

20. A processing method comprising:
receiving a request for mapping a plurality of QoS flows to one network slice associated with one PDU session;
acquiring subscription information of a terminal device to which the one PDU session is to be established; and
allocating identification information for each of the plurality of QoS flows and mapping the plurality of QoS flows to the one network slice in a case where the plurality of QoS flows is available on a basis of the subscription information.
